(19) Europäisches Patentamt
European Patent Office
Office européen des brevets

(11) Veröffentlichungsnummer: **0 176 604 B1**

# (12) EUROPÄISCHE PATENTSCHRIFT

(45) Veröffentlichungstag der Patentschrift: **12.06.91**

(21) Anmeldenummer: **84105907.4**

(22) Anmeldetag: **18.03.82**

Die Akte enthält technische Angaben, die nach dem Eingang der Anmeldung eingereicht wurden und die nicht in dieser Patentschrift enthalten sind.

(51) Int. Cl.$^5$: **C08G 63/68**, C08L 101/00, //(C08L101/00,67:00)

(60) Veröffentlichungsnummer der früheren Anmeldung nach Art. 76 EPÜ: **0 061 659**

## (54) Hochmolekulare piperidingruppenhaltige Ester, Verfahren zu ihrer Herstellung, ihre Verwendung als Stabilisatoren für Polymere, sowie diese Verbindungen enthaltende Polymere.

(30) Priorität: **21.03.81 DE 3111209**

(43) Veröffentlichungstag der Anmeldung:
**09.04.86 Patentblatt 86/15**

(45) Bekanntmachung des Hinweises auf die Patenterteilung:
**12.06.91 Patentblatt 91/24**

(84) Benannte Vertragsstaaten:
**AT BE CH DE FR GB IT LI NL SE**

(56) Entgegenhaltungen:
**EP-A- 0 003 542**
**AT-B- 351 269**
**DE-A- 2 422 335**
**DE-A- 2 636 144**
**FR-A- 2 010 794**
**EP-A- 0 024 338**
**DE-A- 2 319 816**
**DE-A- 2 621 870**
**DE-A- 2 719 131**

(73) Patentinhaber: **HOECHST AKTIENGESELLSCHAFT**
**Postfach 80 03 20**
**W-6230 Frankfurt am Main 80(DE)**

(72) Erfinder: **Wiezer, Hartmut, Dr.**
**Am Herzhain 1b**
**W-6239 Eppstein/Taunus(DE)**
Erfinder: **Pfahler, Gerhard, Dr.**
**Karlsbader Strasse 27**
**W-8900 Augsburg(DE)**

EP 0 176 604 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Hochmolekulare piperidingruppenhaltige Ester, Verfahren zu ihrer Herstellung, ihre Verwendung als Stabilisatoren für Polymere, sowie diese Verbindungen enthaltende Polymere

Gegenstand der vorliegenden Erfindung, welche eine Ausscheiolung aus europäischen Anmeldung 82 102 193.8 (EP-A-61659) ist sind neue hochmolekulare Polyalkylpiperidinverbindungen der allgemeinen Formel (I)

$$R^1-[-O-\overset{\overset{O}{\|}}{C}-A-\overset{\overset{O}{\|}}{C}-O-B-]_n-OH \qquad (I),$$

in welcher

n

eine ganze Zahl größer 1 bis 100 ist und

A

für einen $C_1$- bis $C_{18}$- aliphatischen Rest, vorzugsweise $C_2$- bis $C_6$-, insbesondere $C_6$-Alkylen oder $C_2$- bis $C_{18}$-Alkenylen steht, welcher durch eine oder zwei OH-Gruppen und/oder ein oder zwei

$$-\overset{\overset{O}{\|}}{C}-O-R^2-$$

Reste substituiert sein kann, oder für Phenylen, Naphthylen, $C_7$- bis $C_{14}$-Phenylalkylen oder $C_3$- bis $C_{12}$-, vorzugsweise $C_4$- bis $C_6$-, insbesondere $C_6$-Cycloalkylen steht, welches jeweils durch $C_1$-$C_4$-Alkylreste und/oder eine oder zwei OH-Gruppen und/oder ein oder zwei

$$-\overset{\overset{O}{\|}}{C}-O-R^2-$$

Reste substituiert sein kann, oder für den Rest

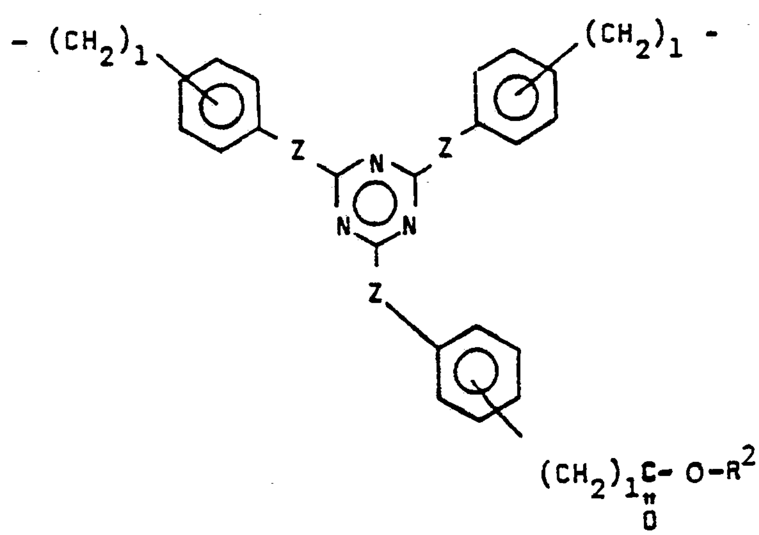

oder für einen Rest

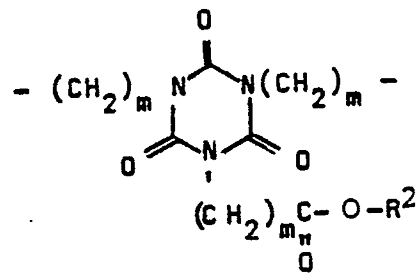

steht, wobei in diesen Resten

l

eine ganze Zahl von 0 bis 2, vorzugsweise 0,

m

eine ganze Zahl von 1 bis 5, vorzugsweise 1 oder 2, insbesondere jedoch 1 ist,

Z

-O-, oder -NH- ist, und

$R^1$ und $R^2$

Methyl oder Ethyl sein sollen.

B

hat die Bedeutung einer Gruppe der Formel (II), (III), (IV) oder (V).

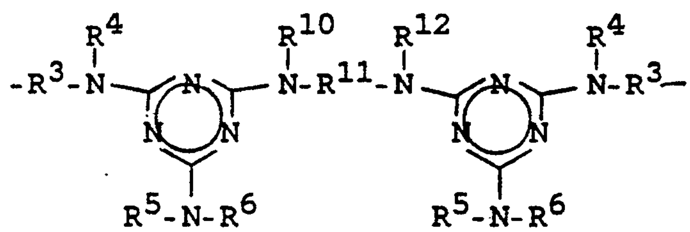

(II),

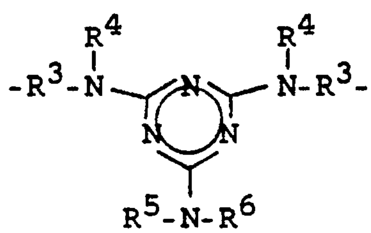

(III),

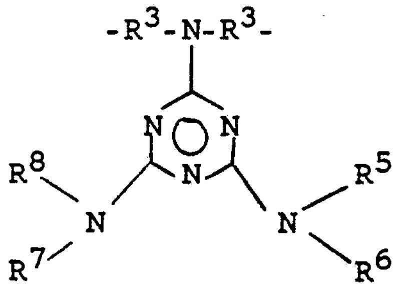

(IV),

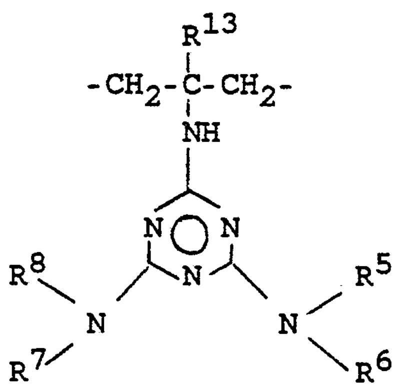

(V);

In den Formeln (II) bis (V) ist

$R^3$

eine $C_2$- bis $C_6$-Alkylengruppe und steht

$R^4$

insbesondere für Wasserstoff, für $C_1$- bis $C_{12}$-Alkyl, für $C_5$- bis $C_{12}$-Cycloalkyl oder bevorzugt für eine Gruppe der Formel (VI),

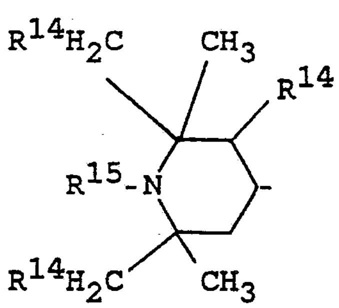

(VI),

mit

$R^{14}$ =

Wasserstoff oder Methyl, vorzugsweise Wasserstoff und

$R^{15}$ =

Wasserstoff, $C_1$- bis $C_{12}$-Alkyl, das durch 1 oder 2 Hydroxylgruppen substituiert sein kann, $C_3$- bis $C_8$-Alkenyl, oder Benzyl, vorzugsweise jedoch Wasserstoff.

Die Reste $R^5$, $R^6$, $R^7$,$R^8$ sind gleich oder verschieden und bedeuten Wasserstoff, $C_1$- bis $C_{18}$-, vorzugsweise $C_1$- bis $C_{12}$-, und insbesondere $C_1$- bis $C_8$-Alkylreste, die durch Hydroxy, $C_1$- bis $C_{18}$-Alkoxy oder $C_1$- bis $C_4$-Dialkylamino substituiert sein können, wobei alkoxy- oder dialkylaminosubstituiertes Alkyl vorzugsweise 2 bis 5 Kohlenstoffatome hat, und durch $C_1$- bis $C_{18}$-Alkoxy, vorzugsweise $C_1$- oder $C_2$-Alkoxy oder durch $C_1$- bis $C_4$-Dialkylamino; vorzugsweise $C_1$- oder $C_2$-Dialkylamino substituiert ist, $C_5$- bis $C_{12}$-Cycloalkyl, Allyl, Phenyl, das durch 1 oder 2 $C_1$- bis $C_8$-Alkylgruppen und/oder durch OH substituiert sein kann, $C_7$- bis $C_{14}$-Aralkyl, vorzugsweise $C_7$- bis $C_{14}$-Phenylalkyl, insbesondere $C_7$- bis $C_{14}$-Phenylal-

kyl, insbesondere $C_7$- bis $C_9$-Phenylalkyl, oder eine Gruppe der Formel (VI) oder eine Gruppe der Formeln (VII) oder (VIII).

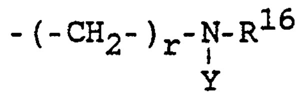 (VII),

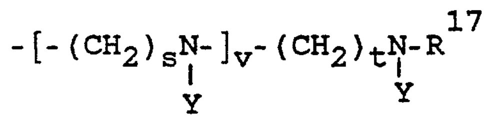 (VIII).

In den Formeln (VII) und (VIII) bedeuten:

r, s und t

gleiche oder unterschiedliche Zahlen von 2 bis 6, vorzugsweise 2 oder 3, und

v

eine Zahl von 0 bis 3, vorzugsweise 0 oder 1 und insbesondere 0;

$R^{16}$ und $R^{17}$

sind gleich oder verschieden und stehen für Wasserstoff, für $C_1$- bis $C_{18}$- vorzugsweise $C_1$- bis $C_{12}$- und insbesondere $C_1$- bis $C_8$-Alkyl, für $C_5$- bis $C_{12}$-Cycloalkyl, für $C_7$- bis $C_{14}$-Aralkyl, insbesondere $C_7$- bis $C_9$-Phenylalkyl oder für eine Gruppe der Formel (VI), Y besitzt die Bedeutung eines Restes der Formel (IX),

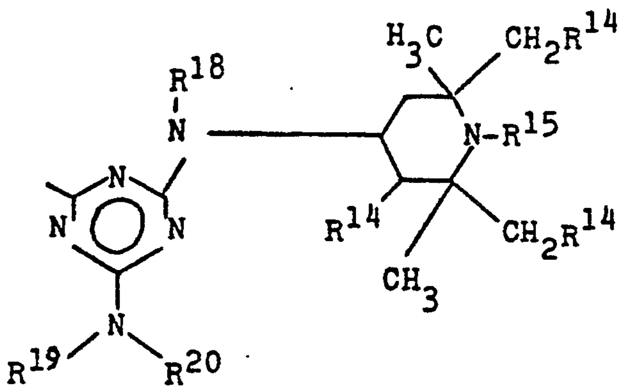 (IX),

in der

$R^{14}$ und $R^{15}$

die vorstehend angegebenen, und

$R^{18}$ und $R^{19}$

die für $R^5$, $R^6$, $R^7$ und $R^8$ genannten Bedeutungen, ausgenommen die der Formeln (V) und (VII) haben, und

$R^{20}$

Wasserstoff, $C_1$- bis $C_{18}$-Alkyl, vorzugsweise $C_1$-bis $C_{12}$-Alkyl, insbesondere $C_1$- bis $C_8$-Alkyl, $C_5$-bis $C_{12}$-Cycloalkyl, $C_7$- bis $C_{14}$-Aralkyl, vorzugsweise $C_7$- bis $C_{14}$-Phenylalkyl und insbesondere $C_7$- bis $C_9$-Phenylalkyl oder bevorzugt eine Gruppe der Formel (VI) ist.

$R^9$

hat die Bedeutung einer Gruppe der Formeln (VII) oder (VIII).

$R^{10}$ und $R^{12}$

sind gleiche oder verschiedene Reste mit der Bedeutung von $R^{16}$ und $R^{17}$.

$R^{11}$

bedeutet $C_2$- bis $C_{18}$-, vorzugsweise $C_2$- bis $C_{12}$- und insbesondere $C_2$- bis $C_6$-Alkylen, oder $C_2$- bis $C_{12}$-Bis-(propyloxy)-alkylen, oder $C_6$- bis $C_{18}$-, vorzugsweise $C_6$- bis $C_{12}$- unsubstituiertes oder durch bis zu vier Methylgruppen substituiertes, vorzugsweise unsubstitutiertes Mono-, Di- oder Tricycloalkylen, in welchem bei dem erstgenannten zwei C-Atome durch N-Atome, welche Propylengruppen tragen können, ersetzt sein können, oder $C_6$- bis $C_{18}$-Arylen, vorzugsweise Phenylen, oder $C_7$- bis $C_{18}$-Aralkylen.

Der Rest

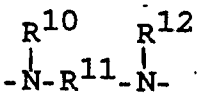

kann ferner für einen Piperazinylenrest stehen.

$R^{13}$

ist Methyl oder Hydroxymethylen oder Ethyl.

In der Formel (I) muß mindestens ein Rest für eine Gruppe der Formel (VI) stehen oder diese enthalten.

Die neuen Verbindungen werden durch Umsetzen von Estern der Formel (X)

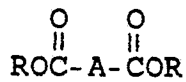 (X),

in welchen A die vorstehend angegebene Bedeutung und R die von Methyl oder Ethyl hat, mit einer Verbindung der allgemeinen Formel (XI)

H-O-B-O-H (XI),

oder einem Gemisch derartiger Verbindungen erhalten, wobei in dieser Formel B die vorstehend angegebene Bedeutung hat.

Es kommt die, bezogen auf (X), 0,8- bis 1,2-, vorzugsweise 0,9- bis 1,1- und insbesondere die 1-fach molare Menge von (XI) zum Einsatz.

Die Reaktion wird in inerten organischen Lösungsmitteln bei Temperaturen von 70 bis 200, vorzugsweise 110 bis 200 und insbesondere 130 bis 180 °C, gegebenenfalls in Gegenwart von Katalysatoren durchgeführt.

Geeignete Lösungsmittel sind z.B. Toluol, Xylol, Mesitylen, Dioxan und für die Amidbildung zusätzlich niedere Alkohole wie Propanol, Butanol, Hexanol, oder Dimethylformamid.

Als Katalysatoren für die Umesterungen können NaH, $LiNH_2$, Alkalimetallalkoholate oder Titantetraalkylate jeweils in Mengen von 0,05 bis 1,0 Gew.-%, bezogen auf Verbindung (XI), verwendet werden.

Beispiele für Ausgangsmaterialien der Formel (X) sind:

1. Malonsäurediethylester
2. Bernsteinsäuredimethylester
3. Adipinsäuredimethylester
4. Korksäuredimethylester
5. Sebazinsäuredimethylester
6. Dodecandisäuredimethylester
7. Terephthalsäuredimethylester
8. Maleinsäuredimethylester
9. Fumarsäuredimethylester
10. Itaconsäuredimethylester
11. Äpfelsäuredimethylester
12. 1,2,4-Benzoltricarbonsäuretrimethylester
13. 1,2,3,5-Benzoltetracarbonsäuretetramethylester
14. Tetrahydrophthalsäuredimethylester
15. Bis-carbethoxymethylenmalonsäurediethylester
16. 1,3,5-Tris-(carbethoxymethylen)-isocyanurat
17. 1,3,5-Tris-(carbmethoxymethylen)-isocyanurat
18. 1,3,5-Tris-(carbmethoxyethylen)-isocyanurat
19. Tris-2,4,6-[4-(carbethoxy]-phenylenoxy]-1,3,5-triazin

Beispiele für Ausgangsmaterialien der Formel (XI), welche zur Herstellung solcher Verbindungen der Formel (I) dienen, in denen B einen Rest der Formel (II) darstellt, sind:

20. N,N'-Bis-[2-(3-hydroxypropylamino)-4-<(2,2,6,6-tetramethyl-4-piperidyl)-3-methoxypropylamino>-1,3,5-triazin-6-yl]-N-(2,2,6,6-tetramethyl-4-piperidyl)-1,6-diaminohexan

21. N,N'-Bis-[2-(3-hydroxypropylamino)-4-<(2,2,6,6-tetramethyl-4-piperidyl)-3-methoxypropylamino>-1,3,5-triazin-6-yl]-N,N'-bis-(2,2,6,6-tetramethyl-4-piperidyl)-3(4),8(9)-bis-(aminomethyl)-tricyclo[5,2,1,$0^{2,6}$]-

decan-Isomerengemisch

Beispiele für Ausgangsmaterialien der Formel (XI), welche zur Herstellung solcher Verbindungen der Formeln (I) dienen, in denen B einen Rest der Formel (III) bedeutet, sind:

22. 2,4-Bis-(3-hydroxypropylamino)-6-[N-(2,2,6,6-tetramethyl-4-piperidyl)-butylamino]-1,3,5-triazin

23. 2,4-Bis-(3-hydroxypropylamino)-6-[N-(2,2,6,6-tetramethyl-4-piperidyl)-3-methoxypropylamino]-1,3,5-triazin

24. 2,4-Bis-(3-hydroxyethylamino)-6-[N-(2,2,6,6-tetramethyl-4-piperidyl)-butylamino]-1,3,5-triazin

25. 2,4-Bis-(3-hydroxypropylamino)-6-[N-(2,2,6,6-tetramethyl-4-piperidyl)-3-dimethylpropylamino]-1,3,5-triazin

26. 2,4-Bis-(3-hydroxyhexylamino)-6-[N-(2,2,6,6-tetramethyl-4-piperidyl)-3-methoxypropylamino]-1,3,5-triazin

Beispiele für Ausgangsmaterialien der Formel (XI), welche zur Herstellung solcher Verbindungen der Formel (I) dienen, in denen B ein Rest der Formel (IV) ist, sind:

27. 2-(Diethanolamino)-4,6-bis-[N-(2,2,6,6-tetramethyl-4-piperidyl)-3-methoxypropylamino]-1,3,5-triazin

28. 2-(Diethanolamino)-4-octadecylamino-6-[N-(2,2,6,6-tetramethyl-4-piperidyl)-3-methoxypropylamino]-1,3,5-triazin

29. 2-(Diethanolamino)-4,6-bis-{1,9-bis-[2,4-bis- N-(2,2,6,6-tetramethyl-4-piperidyl)-3-methoxypropylamino -1,3,5-triazin-6-yl]-1,5,9-triazanonyl-5}-1,3,5-triazin

30. 2-(Diethanolamino)-4-cyclohexylamino-[N-(2,2,6,6-tetramethyl-4-piperidyl)-3-methoxypropylamino]-1,3,5-triazin

31. 2-(Diethanolamino)-4-butylamino-6-[N-(2,2,6,6-tetramethyl-4-piperidyl)-3-methoxypropylamino]-1,3,5-triazin

Beispiel für Ausgangsmaterialien der Formel (XI), welche zur Herstellung solcher Verbindungen der Formel (I) dienen, in denen B einen Rest der Formel (V) bedeutet, ist:

32. 2-(Trishydroxymethylenmethylamino)-4,6-bis-[N-(2,2,6,6-tetramethyl-4-piperidyl)-butylamino]-1,3,5-triazin

In der Literatur sind bereits zahlreiche Polyalkylpiperidinverbindungen, die die Estergruppe oder die Carbamoylgruppe enthalten, beschrieben. Genannt seien DE-A-27 30 397, sowie DE-A-23 19 816 (Isocyanursäurederivate), DE-B-19 29 928 (Polyalkylpiperidylester), DE-A-27 19 133, DE-A-26 23 422 und DE-A-26 21 870 (Polyalkylpiperidylester und -amide), DE-A-26 40 409 (Polyalkylpiperidylurethane) und DE-A-27 19 131 (Polyalkylpiperidylpolyester, -polyamide und -polyurethane). Den mittlerweile außerordentlich hohen technischen Anforderungen, die an Lichtstabilisatoren für synthetische Polymere gestellt werden, genügen diese in ihrer Wirkung, Flüchtigkeit und Auswaschfestigkeit gegen Wasser völlig unzureichenden Verbindungen nicht mehr.

In der neueren Zeit sind auch Triazinabkömmlinge beschrieben worden, die zwar die hydrolyseanfällige Ester- oder Urethanstruktur nicht besitzen (DE-A-26 36 144, DE-A-26 36 130, AT-B 351 269, EP-A 24338) und somit strukturell an sich nicht mit den erfindungsgemäßen Substanzen verglichen werden können, jedoch in ihrem anwendungstechnischen Gesamtbild auch noch nicht voll befriedigen.

Ester, die mit der wirksamen Piperidylaminostruktureinheit verknüpft sind, sind aus der EP-A-3542 bekannt. Hier ist primär der eigentliche Wirkungsträger blockiert, so daß die hochmolekulare Struktur im Stabilisierungsprozeß erst wieder in Bruchstücke aufgelöst werden muß. Die so entstehenden niedermolekularen Anteile bedingen, daß auch diese Produkte die oben angeführten Nachteile der zu hohen Flüchtigkeit und Auswaschbarkeit besitzen.

Es war überraschend und nicht zu erwarten, daß die neuen Verbindungen trotz ihrer Esterstruktur denen des Standes der Technik überlegen sein werden, man mußte vielmehr damit rechnen, daß bei ihrer Verwendung dieselben Probleme bezüglich der Flüchtigkeit, Auswaschbarkeit und unzureichenden Wirksamkeit auftreten würden, wie sie bei den oben zitierten Verbindungen des Standes der Technik beobachtet werden. Keineswegs vorhersehbar war schließlich auch die Überlegenheit der neuen Ester im Hinblick auf die ebenfalls hochmolekularen Produkte gemäß DE-A-27 19 131, denn beide Substanzklassen lassen ähnliche chemische Grundstrukturen erkennen. Nachdem die Verbindung gemäß Bsp. 1 in DE-A 27 19 131 als ein in der Praxis bereits verwendetes Spitzenprodukt bezeichnet werden kann, war nicht damit zu rechnen, daß es gelingen würde, Produkte in die Hand zu bekommen, die diesem Produkt deutlich überlegen sind und sich trotz der strukturellen Bedenken auch den vorstehend zitierten Triazinabkömmlingen mit freier Piperidin -NH-Gruppe als mindestens ebenbürtig erweisen.

Die neuen Triazinstabilisatoren lassen sich problemlos in die zu stabilisierenden Polymeren einarbeiten und sind hervorragend zum Stabilisieren derselben gegen den lichtinduzierten oxidativen Abbau geeignet. Neben der ausgezeichneten Stabilisatorwirksamkeit zeichnet die neuen Stabilisatoren ihre Verträglichkeit mit den zu stabilisierenden Polymeren, ihre Migrationsfestigkeit gegen das Auswaschen mit wäßrigen

Medien, welche bei der Freibewitterung eine bedeutende Rolle spielt, ihre Thermostabilität auch bei hohen Verarbeitungstemperaturen und ihre geringe Flüchtigkeit, insbesondere im Vergleich zu Beispiel 6 der DE-A 26 36 144 aus.
Die neuen Verbindungen werden - wie bereits ausgeführt - als Stabilisatoren für Kunststoffe gegen deren Schädigung durch Einwirkung von Sauerstoff, Wärme und Licht verwendet.

Beispiele für solche Kunststoffe sind im einzelnen:
Polymere, die sich von einfach oder doppelt ungesättigten Kohlenwasserstoffen ableiten, z.B. Polyolefine wie Polyethylen, das gegebenenfalls vernetzt sein kann, Polypropylen, Polybuten-1, Polyisobuten, Polymethylbuten-1, Polymethylpenten-l, Polyisopren, Polybutadien, Polystyrol, Copolymere der den genannten Homopolymeren zugrundeliegenden Monomeren, wie Ethylen-Propylen-Copolymere, Propylen-Buten-1-Copolymere, Propylen- Isobuten-Copolymere, Styrol-Butadien-Copolymere sowie Terpolymere von Ethylen und Propylen mit einem Dien, wie z.B. Hexadien, Dicyclopentadien oder Ethylidennorbornen, Mischungen der obengenannten Homopolymeren, wie beispielsweise Gemische von Polypropylen und Polyethylen, Polypropylen und Polybuten-l, Polypropylen und Polyisobutylen oder von Butadien-Acrylnitril-Copolymerisat mit einem Styrol-Butadien-Copolymerisat.
Halogenhaltige Vinylpolymere, wie Polyvinylchlord, Polyvinylidenchlorid, Polyvinylfluorid, Polychloropren und Chlorkautschuke sowie Copolymere von Vinylchlorid und Vinylidenchlorid untereinander und mit anderen olefinisch ungesättigten Monomeren.
Polymere, die sich von $\alpha,\beta$-ungesättigten Säuren und deren Derivaten ableiten, wie Polyacrylate und Polymethacrylate, Polyacrylamide und Polyacrylnitril sowie deren Copolymere untereinander und mit anderen Vinylverbindungen, wie Acrylnitril-Butadien-Styrol,Acrylnitril-Styrol- und Acrylnitril-Styrol-Acrylester-Copolymerisate.
Polymere, die sich von ungesättigten Alkoholen und Aminen bzw. deren Acylderivaten oder Acetalen ableiten, wie Polyvinylalkohol, Polyvinylacetat, -stearat, -benzoat, -maleat, Polyvinylbutyral, Polyallylphthalat, Polyallylmelamin und deren Copolymere mit anderen Vinylverbindungen, wie Ethylen-Vinylacetat-Copolymere.
Homo- und Copolymere, die sich von Epoxiden ableiten, wie Polyethylenoxid oder die Polymerisate, die sich von Bisglycidylethern ableiten.
Polyacetale, wie Polyoxymethylen und Polyoxyethylen sowie solche Polyoxyethylene, die als Comonomeres Ethylenoxid enthalten.
Polyurethane und Polyharnstoffe.
Polycarbonat.
Polyamide und Copolyamide, die sich von Diaminen und Dicarbonsäuren und/oder von Aminocarbonsäuren oder den entsprechenden Lactamen ableiten, wie Polyamid 6, Polyamid 6/6, Polyamid 6/10, Polyamid 11, Polyamid 12.
Polyester, die sich von Dicarbonsäuren und Dialkoholen und/oder von Hydroxycarbonsäuren oder den entsprechenden Lactonen ableiten, wie Polyethylenterephthalat, Polybutylenterephthalat, Poly-1,4-dimethylol-cyclohexanterephthalat.

Vernetzte Polymerisate, die sich von Aldehyden einerseits und Phenolen, Harnstoffen und Melaminen andererseits ableiten ,wie Phenol-Formaldehyd-, Harnstoff-Formaldehyd- und Melamin-Formaldehydharze.

Die neuen Verbindungen lassen sich schließlich auch als Stabilisatoren auf dem Harz- und Lacksektor einsetzen. Beispiele sind duroplastische und thermoplastische Acrylharze, welche für Autolackierungen verwendet werden (Encyclopedia of Polymer Science and Technology, Interscience Publishers, New York, Band 1 (1964), Seiten 273-276 und Band 13 (1970), Seiten 530-532, "Unterstanding Paint" von W .R. Fuller, in American Paint Journal Co., St. Louis, 1965, Seiten 124-135), Acrylharzlacke, das sind die üblichen Einbrennlacke (beschrieben z.B. in H. Kittel's "Lehrbuch der Lacke und Beschichtungen", Band 1, Teil 2, Seiten 735 und 742 (Berlin, 1972), und in H. Wagner, H.F. Sarx "Lackkunstharze", Seiten 229-235) sowie ganz besonders Mischungen auf der Basis von heiß-vernetzbarem Acrylharz und Styrol sowie Lacke und Beschichtungen auf der Basis von Acryl/Melaminharz und Alkyd/Acryl/Melaminharz. Derartige Lacke können als weitere Zusatzstoffe andere übliche Lichtschutzmittel, phenolische Antioxidantien, Pigmente, Farbstoffe oder Metalldesaktivatoren enthalten.

Von besonderer Bedeutung ist die Stabilisierung von Polyolefinen, Styrolpolymerisaten, Polyamiden, Poly-(meth)acrylaten und von Polyurethanen, für die sich die Verbindungen bevorzugt eignen.

Beispiele hierfür sind Polyethylen hoher und niedriger Dichte, Polypropylen, Ethylen-Propylen-Copolymerisate, Polystyrol, Styrol-Butadien-Acrylnitril-Terpolymerisate, Mischungen von Polyolefinen oder von Styrolpolymerisaten sowie Polyurethane auf Polyether- oder Polyesterbasis.

Die neuen Stabilisatoren werden nach allgemein üblichen Methoden in die Polymermassen eingearbeitet. Die Einarbeitung kann beispielsweise durch Einmischen der Verbindungen und gegebenenfalls weiterer

Additive in die Schmelze nach den in der Technik üblichen Methoden, vor oder während der Formgebung, oder auch durch Aufbringen der gelösten oder dispergierten Verbindungen auf das Polymere direkt oder Einmischen in eine Lösung, Suspension oder Emulsion desselben, gegebenenfalls unter nachträglichem Verdunstenlassen des Lösungsmittels, erfolgen. Die Mengen liegen bei 0,01 bis 5, vorzugsweise bei 0,05 bis 2,5 und insbesondere bei 0,1 bis 1,0 Gew.-%, bezogen auf das zu stabilisierende Material. Die neuen Verbindungen können auch in Form eines Masterbatches, der diese Verbindungen beispielsweise in einer Konzentration von 1 bis 50, vorzugsweise 2,5 bis 20 Gew.-% enthält, den zu stabilisierenden Kunststoffen zugesetzt werden.

Die durch den Zusatz der erfindungsgemäßen Substanzen stabilisierten Kunststoffe können gegebenenfalls noch andere bekannte und übliche Zusätze, wie beispielsweise Antioxidantien auf Phenol- und Sulfidbasis, Metalldesaktivatoren und Lichtschutzmittel, Phosphitstabilisatoren, Metallverbindungen, Epoxystabilisatoren und mehrwertige Alkohole enthalten (s.a. DE-A 24 27 853, S. 18-24).
Beispiele für Antioxidantien sind sterisch gehinderte Phenole wie 2,6-Di-tert.-butyl-4-methylphenol, 4,4-Butyliden-bis-(2,6-di-tert.-butylphenol), 4,4'Thiobis-(2-tert.-butyl-5-methylphenol), 2,5-Di-tert.-butyl-4-hydroxyanisol, 2,2-Bis-(3,5-di-tert.-butyl-2-hydroxibenzyl)-malonsäuredioctadecylester, 1,3,5-Tris-(3,5-ditert.-butyl-4-hydroxybenzyl)-2,4,6-tri-methylbenzol, 2,4,6-Tri-(3,5-di-tert.-butyl-4-hydroxybenzyl)-phenol, phenolische Triazinverbindungen wie 1,3,5-Tris-(3,5-di-tert.-butyl-4-hydroxybenzyl)-isocyanurat, Ester der $\beta$-(3,5-Di-tert.-butyl-4-hydroxyphenyl)-propionsäure mit z.B. Octadecanol, Pentaerythrit und Tris-hydroxyethyl-isocyanurat, Ester der 3,3-Bis-(3-tert.-butyl-4-hydroxyphenyl)-butansäure mit z.B. Ethylenglykol, Thiodipropionsäureester mit Fettalkoholen, Ca- oder Ni-Salze des 3,5-Di-tert.-butyl-4-hydroxybenzylphosphorsäureethylesters, Dioctadecylsulfid und -disulfid.

Zu den UV-Absorbern und Lichtschutzmitteln gehören 2(2'-Hydroxyphenyl)-benztriazole wie z.B. das 5-Chlor-3'-5'-di-tert.-butyl- und 5-Chlor-3',5'-di-tert.-amyl-Derivat, 2-Hydroxybenzophenone wie z.B. das 4-Heptoxy- oder 4-Octoxy-Derivat, Salicylate wie Octylphenylsalicylat, Nickelkomplexe wie z.B. das 2,2'-Thio-bis-[(4-(1,1,3,3-tetramethylbutyl)-phenol] mit Butylamin oder anderen Aminen, Oxalsäurediamide und sterisch gehinderte Amine.

Als Phosphite sind aliphatische, aromatische oder aliphatisch-aromatische wie z.B. Trisnonylphenylphosphit, Tris-(2,4-di-tert.-butylphenyl)-phosphit, Tris-(2-tert.-butylphenyl)-phosphit oder auch Ester des Pentaerythritphosphits zu nennen.

Unter als Stabilisatoren bekannten Metallverbindungen werden in diesem Zusammenhang verstanden: Calcium-, Barium, Strontium-, Zink-, Cadmium-, Magnesium-, Aluminium- und Bleiseifen aliphatischer Carbonsäuren oder Oxycarbonsäuren mit 12 bis 32 C-Atomen, Salze der genannten Metalle mit aromatischen Carbonsäuren wie Benzoate oder Salicylate sowie (Alkyl)-Phenolate dieser Metalle, ferner Organozinnverbindungen wie z.B. Dialkylzinnthioglykolate und -carboxylate.

Bekannte Epoxystabilisatoren sind z.B. epoxidierte höhere Fettsäuren wie epoxidiertes Sojabohnenöl, Tallöl, Leinöl oder epoxidiertes Butyloleat sowie Epoxide langkettiger Olefine.

Mehrwertige Alkohole können beispielsweise Pentaerythrit, Trimethylolpropan, Sorbit oder Mannit sein, d.h. bevorzugt Alkohole mit 5 oder 6 C-Atomen und 2 bis 6 OH-Gruppen.

Eine wirksame Stabilisatorkombination für Poly-$\alpha$-Olefine, wie z.B. Hoch-, Mittel- und Niederdruckpolymerisate von $C_2$- bis $C_4$-$\alpha$-Olefinen, insbesondere Polyethylen und Polypropylen oder von Copolymerisaten derartiger $\alpha$-Olefine besteht, bezogen auf 100 Gewichtsteile Polymer, beispielsweise aus 0,01 bis 5 Gewichtsteilen einer der erfindungsgemäß zu verwendenden Verbindungen, 0,05 bis 5 Gewichtsteilen eines phenolischen Stabilisators, gegebenenfalls 0,01 bis 5 Gewichtsteilen eines schwefelhaltigen Costabilisators sowie gegebenenfalls 0,01 bis 3 Gewichtsteilen einer basischen oder neutralen Metallseife, wie z.B. Calciumstearat oder Zinkstearat oder der entsprechenden Oxide sowie gegebenenfalls 0,01 bis 5 Gewichtsteilen eines bekannten UV-Stabilisators z.B., von Benzylidenmalonsäuremononitrilester, oder der sog. Quencher, wie z.B. Nickelchelate. Als sonstige übliche Zusätze sind z.B. Weichmacher, Gleitmittel, Emulgatoren, Füllstoffe wie z.B. Kreide, Talkum, Asbest, Pigmente, optische Aufheller, Flammschutzmittel und Antistatika anzusehen.

Die erfindungsgemäß stabilisierten Kunststoffe können in verschiedenster Form angewendet werden, z.B. als Folien, Fasern, Bändchen, Profile oder als Bindemittel für Lacke, Klebemittel oder Kitte.

Die folgenden Beispiele dienen der weiteren Erläuterung der Erfindung:

**Beispiele**

In den folgenden Herstellungsbeispielen sind die eingesetzten Ausgangsstoffe durch Ziffern gekennzeichnet, welche sich auf die Numerierung der auf den Seiten 7 bis 9 aufgelisteten Substanzen beziehen.

**Beispiel 1**

3,2 g (0,02 Mol) der Verbindung 1 wurden mit 12,7 g (0,02 Mol) der Verbindung 27 in 100 ml Xylol unter wasserfreien Bedingungen und Zusatz von ca. 0,1 g $LiNH_2$ bei ca. 140 °C umgesetzt. In 3 Stunden wurden 0,9 g Ethanol abdestilliert. Anschließend wurde heiß filtriert, das Lösungsmittel im Vakuum abdestilliert und der Rückstand i. Vak. getrocknet. Fp. 84 - 106 °C.

**Beispiele 2 bis 13**

Man arbeitete analog Beispiel 1,

| Bsp. Nr. | Edukt 1 Verb. Nr. [g ≙ Mol] | Edukt 2 Verb. Nr. [g ≙ Mol] | Katalysator | Verfahrens-produkt Fp - °C |
|---|---|---|---|---|
| 2 | 6[5,2 ≙ 0,02] | 27[12,7 ≙ 0,02] | $LiNH_2$ | Harz |
| 3 | 2[3,5 ≙ 0,02] | 31[9,6 ≙ 0,02] | dto. | dto. |
| 4 | 5[4,6 ≙ 0,02] | 30[10,1 ≙ 0,02] | dto. | dto. |
| 5 | 1[1,6 ≙ 0,01] | 29[25,6 ≙ 0,01] | dto. | 137-145 |
| 6 | 16[7,8 ≙ 0,02] | 27[12,8 ≙ 0,02] | dto. | 70 - 80 |
| 7 | 16[3,9 ≙ 0,01] | 23[4,5 ≙ 0,01] | dto. | 97-110 |
| 8 | 17[7,0 ≙ 0,02] | 26[10,8 ≙ 0,02] | $Ti[OiC_3H_7]_4$ | 117-125 |
| 9 | 16[7,8 ≙ 0,02] | 26[10,8 ≙ 0,02] | $LiNH_2$ | 89-102 |
| 10 | 17[7,0 ≙ 0,02] | 24[8,8 ≙ 0,02] | $Ti[OiC_3H_7]_4$ | 82-96 |
| 11 | 16[3,9 ≙ 0,01] | 21[12,3 ≙ 0,01] | NaH | 148-161 |
| 12 | 2[1,8 ≙ 0,01] | 20[10,1 ≙ 0,01] | $Ti[OiC_3H_7]_4$ | 143-152 |
| 13 | 16[3,8 ≙ 0,01] | dto | $LiNH_2$ | ca. 130 |

**Ansprüche**

**1.** Polyalkylpiperidinverbindungen der allgemeinen Formel (I)

$$R^1-[-O-\overset{\overset{O}{\|}}{C}-A-\overset{\overset{O}{\|}}{C}-O-B-]_n-OH \qquad (I)$$

in welcher

n

eine ganze Zahl größer 1 bis 100 ist und

A

für einen $C_1$- bis $C_{18}$- aliphatischen Rest steht, welcher durch eine oder zwei OH-Gruppen und/oder ein oder zwei

$$-\overset{\overset{O}{\|}}{C}-O-R^2-$$

Reste substituiert sein kann, oder
für Phenylen, Naphthylen, $C_7$- bis $C_{14}$-Phenylalkylen oder $C_3$- bis $C_{12}$-Cycloalkylen steht, welches jeweils durch $C_1$-$C_4$-Alkylreste und/oder eine oder zwei OH-Gruppen und/oder ein oder zwei

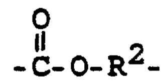

Reste substituiert sein kann, oder für den Rest

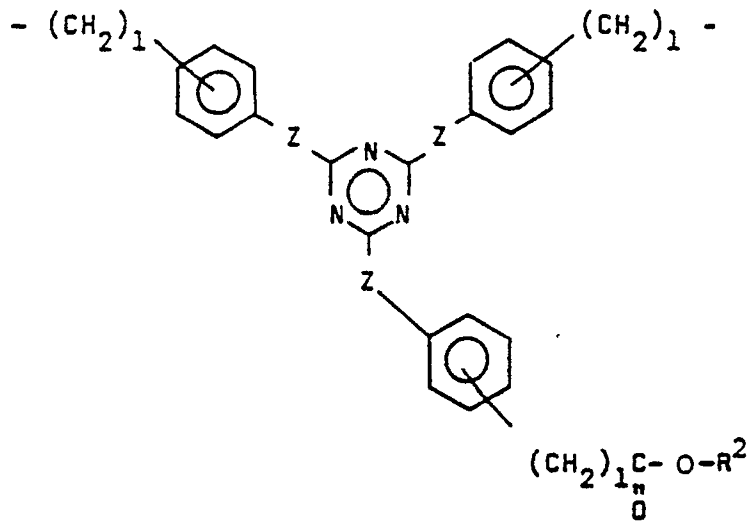

oder für einen Rest

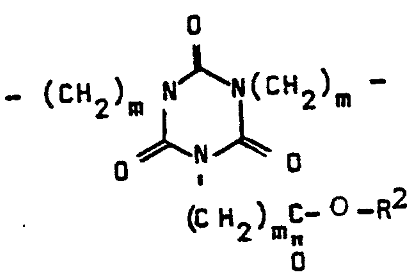

steht, wobei in diesen Resten
l
eine ganze Zahl von 0 bis 2,
m
eine ganze Zahl von 1 bis 5 und
Z
-O-, oder -NH- ist,
$R^1$ und $R^2$
Methyl oder Ethyl sein sollen,
B
für eine Gruppe der Formel (II), (III), (IV) oder (V) steht,

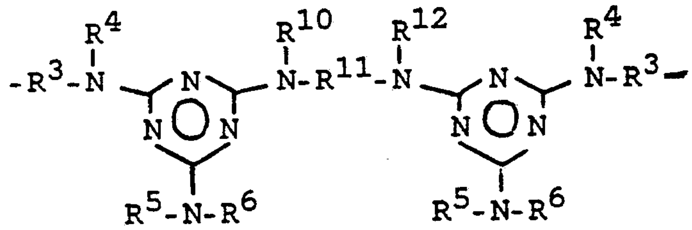

(II),

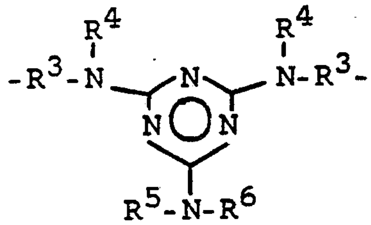

(III),

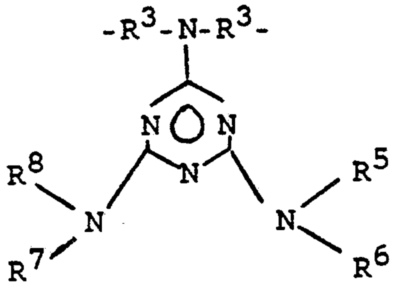

(IV),

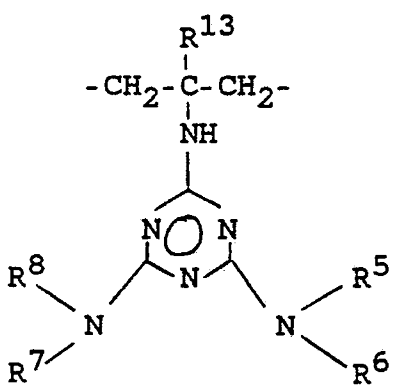

(V);

wobei in den Formeln (II) bis (V)

$R^3$

eine $C_2$- bis $C_6$-Alkylengruppe ist

$R^4$

für Wasserstoff, für $C_1$- bis $C_{12}$-Alkyl, für $C_5$- bis $C_{12}$-Cycloalkyl oder eine Gruppe der Formel (VI),

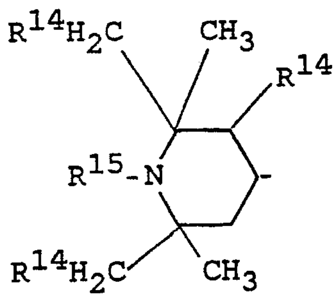

(VI),

mit
$R^{14}$ =
Wasserstoff oder Methyl, und
$R^{15}$ =
Wasserstoff, $C_1$- bis $C_{12}$-Alkyl, das durch 1 oder 2 Hydroxylgruppen substituiert sein kann, $C_3$- bis $C_8$-Alkenyl oder Benzyl steht,
$R^5$, $R^6$, $R^7$, $R^8$
gleich oder verschieden sind und für Wasserstoff, für $C_1$- bis $C_{18}$-Alkyl, das durch Hydroxy, $C_1$- bis $C_{18}$-Alkoxy oder $C_1$- bis $C_4$-Dialkylamino substituiert sein kann, wobei alkoxy- oder dialkylaminosubstituiertes Alkyl vorzugsweise 2 bis 5 Kohlenstoffatome hat, und durch $C_1$- bis $C_{18}$-Alkoxy, oder durch $C_1$- bis $C_4$-Dialkylamino substituiert ist, für $C_5$- bis $C_{12}$-Cycloalkyl, für Allyl, für Phenyl, das durch 1 oder 2 $C_1$- bis $C_8$-Alkylgruppen und/oder durch OH substituiert sein kann, $C_7$- bis $C_{14}$-Aralkyl, für eine Gruppe der Formel (VI), oder eine Gruppe der Formeln (VII) oder (VIII),

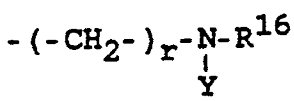

(VII),

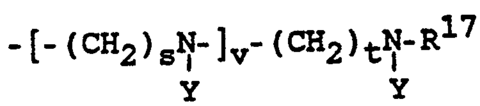

(VIII).

stehen, mit
r, s und t =
gleiche oder unterschiedliche Zahlen von 2 bis 6,
v =
eine ganze Zahl von 0 bis 3,
$R^{16}$ und $R^{17}$ =
gleichen oder verschiedenen Resten, die Wasserstoff, $C_1$- bis $C_{18}$-Alkyl, $C_5$- bis $C_{12}$-Cycloalkyl, $C_7$- bis $C_{14}$-Aralkyl, oder eine Gruppe der Formel (VI) sein können,
und
Y =
einem Rest der Formel (IX)

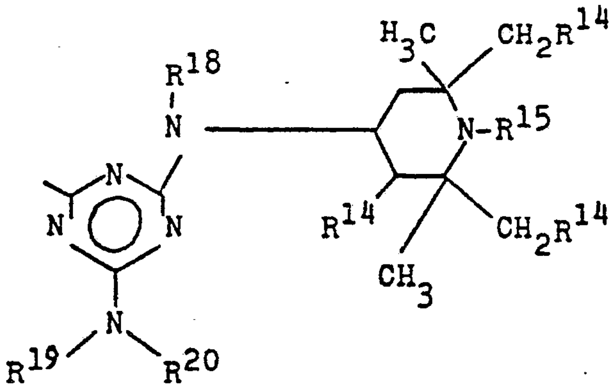

(IX),

in der $R^{14}$ und $R^{15}$ die vorstehend angegebenen Bedeutungen, und

$R^{18}$ und $R^{19}$

die für $R^5$, $R^6$, $R^7$ und $R^8$ genannten Bedeutungen, ausgenommen die der Formeln (VII) und (VIII) haben, und

$R^{20}$

Wasserstoff, $C_1$- bis $C_{18}$-Alkyl, $C_5$- bis $C_{12}$-Cycloalkyl, $C_7$- bis $C_{14}$-Aralkyl, oder eine Gruppe der Formel (VI) ist,

$R^9$

die Bedeutung einer Gruppe der Formeln (VII) oder (VIII) hat,

$R^{10}$ und $R^{12}$

gleiche oder verschiedene Reste mit der Bedeutung von $R^{16}$ und $R^{17}$ sind,

$R^{11}$

für $C_2$- bis $C_{18}$-Alkylen oder für $C_2$- bis $C_{12}$-Bis(propyloxy)-alkylen oder für unsubstituiertes oder durch bis zu vier Methylgruppen substituiertes $C_6$- bis $C_{18}$-Mono-, Di- oder Tricycloalkylen, in welchem bei dem erstgenannten zwei C-Atome durch N-Atome, welche Propylengruppen tragen können, ersetzt sein können, oder $C_6$- bis $C_{18}$-Arylen oder für $C_7$- bis $C_{18}$-Aralkylen steht oder der Rest

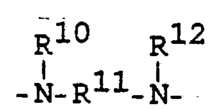

einen Piperazinylenrest darstellt, und

$R^{13}$

Methyl, Hydroxymethylen oder Ethyl ist und in der Formel (I) mindestens ein Rest für eine Gruppe der Formel (VI) steht oder diese enthält.

2. Verfahren zur Herstellung der Polyalkylpiperidinverbindungen nach Anspruch 1, dadurch gekennzeichnet, daß man einen Ester der Formel (X),

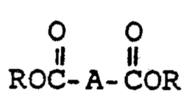

(X),

worin A die in Anspruch 1 angegebenen Bedeutungen hat und R Methyl oder Ethyl ist, in einem inerten organischen Lösungsmittel bei einer Reaktionstemperatur von 70 bis 200 °C, falls erforderlich unter Zusatz von Katalysatoren, mit einer Verbindung der allgemeinen Formel (XI),

H-O-B-O-H (XI)

oder einem Gemisch derartiger Verbindungen umsetzt, wobei in dieser Formel B die in Anspruch 1 angegebene Bedeutung hat und wobei die 0,8 bis 1,2-fach molare Menge von (XI), bezogen auf funktionelle Gruppen in (X), zum Einsatz kommt.

**3.** Verwendung der Verbindungen nach Anspruch 1 zum Stabilisieren von synthetischen Polymeren.

**4.** Verwendung nach Anspruch 3, dadurch gekennzeichnet, daß die Polymeren Polyolefine sind.

**5.** Verwendung nach Anspruch 3, dadurch gekennzeichnet, daß die Polymeren halogenhaltige Polymere, Polyacrylate oder Polymethacrylate oder Homo- oder Copolymere des Styrols sind.

**6.** Verfahren zum Stabilisieren von synthetischen Polymeren gegen den schädigenden Einfluß von Licht, dadurch gekennzeichnet, daß man den Polymeren, gegebenenfalls neben bekannten, stabilisierend wirkenden Stoffen 0,01 bis 5 Gewichtsteile, bezogen auf Polymeres, einer Verbindung nach Anspruch 1 zusetzt.

**7.** Gegen UV-Zersetzung stabilisierte, synthetische Polymere, in denen als Stabilisator 0,01 bis 5 Gewichtsteile, bezogen auf Polymeres, einer Verbindung nach Anspruch 1 enthalten sind.

Patentansprüche für folgenden Vertragsstaat: AT

**1.** Verfahren zur Herstellung von Polyalkylpiperidinverbindungen der allgemeinen Formel (I)

$$R^1-[-O-\overset{\overset{O}{\|}}{C}-A-\overset{\overset{O}{\|}}{C}-O-B-]_n-OH \qquad (I)$$

in welcher

n

eine ganze Zahl größer 1 bis 100 und

A

für einen $C_1$- bis $C_{18}$- aliphatischen Rest steht, welcher durch eine oder zwei OH-Gruppen und/oder ein oder zwei

$$-\overset{\overset{O}{\|}}{C}-O-R^2-$$

Reste substituiert sein kann, oder

für Phenylen, Naphthylen, $C_7$- bis $C_{14}$-Phenylalkylen oder $C_3$- bis $C_{12}$-Cycloalkylen steht, welches jeweils durch $C_1$-$C_4$-Alkylreste und/oder eine oder zwei OH-

$$-\overset{\overset{O}{\|}}{C}-O-R^2-$$

Gruppen und/oder ein oder zwei Reste substituiert sein kann, oder für den Rest

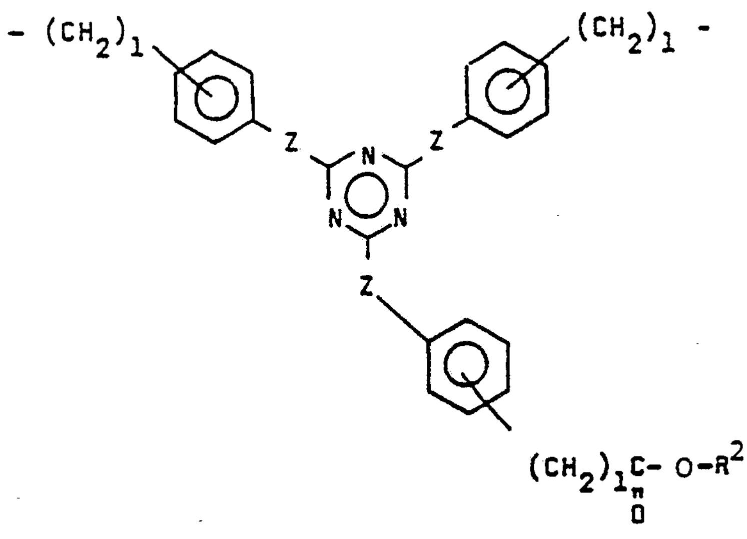

oder für einen Rest

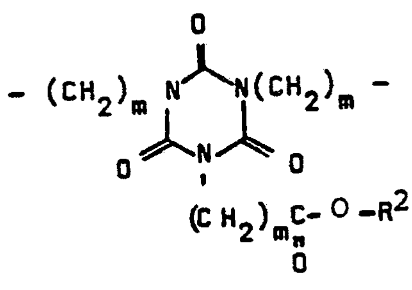

steht, wobei in diesen Resten

l

eine ganze Zahl von 0 bis 2,

m

eine ganze Zahl von 1 bis 5 und

Z

-O-, oder -NH- ist,

$R^1$ und $R^2$

Methyl oder Ethyl sein sollen,

B

für eine Gruppe der Formel (II), (III), (IV) oder (V) steht,

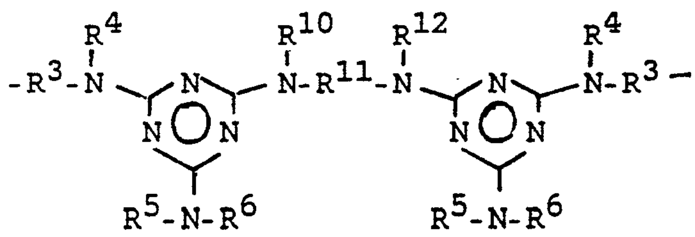

(II),

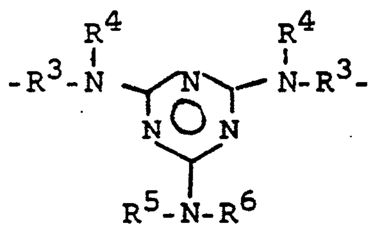

(III),

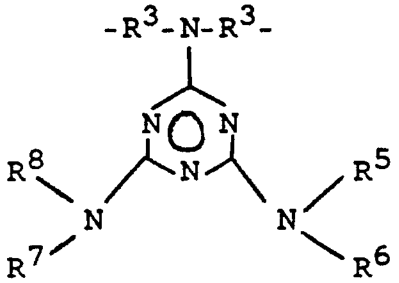

(IV),

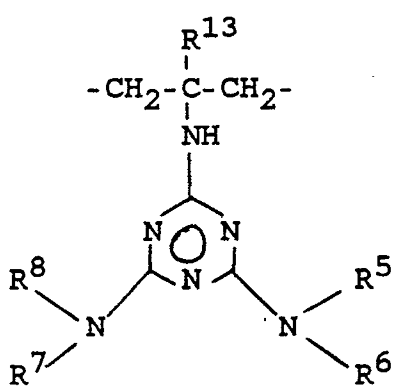

(V);

wobei in den Formeln (II) bis (V)

$R^3$

eine $C_2$- bis $C_6$-Alkylengruppe ist,

$R^4$

für Wasserstoff, für $C_1$- bis $C_{12}$-Alkyl, für $C_5$- bis $C_{12}$-Cycloalkyl oder bevorzugt für eine Gruppe der Formel (VI),

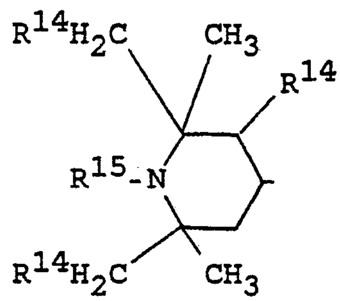

(VI),

mit

$R^{14}$ =

Wasserstoff oder Methyl, und

$R^{15}$ =

Wasserstoff, $C_1$- bis $C_{12}$-Alkyl, das durch 1 oder 2 Hydroxylgruppen substituiert sein kann, $C_3$- bis $C_8$-Alkenyl oder Benzyl steht,

$R^5$, $R^6$, $R^7$, $R^8$

gleich oder verschieden sind und für Wasserstoff, für $C_1$- bis $C_{18}$-Alkyl, das durch Hydroxy, $C_1$- bis $C_{18}$-Alkoxy oder $C_1$- bis $C_4$-Dialkylamino substituiert sein kann, wobei alkoxy- oder dialkylaminosubstituiertes Alkyl vorzugsweise 2 bis 5 Kohlenstoffatome hat, und durch $C_1$- bis $C_{18}$-Alkoxy, oder durch $C_1$- bis $C_4$-Dialkylamino, substituiert ist, für $C_5$- bis $C_{12}$-Cycloalkyl, für Allyl, für Phenyl, das durch 1 oder 2 $C_1$- bis $C_8$-Alkylgruppen und/oder durch OH substituiert sein kann, $C_7$- bis $C_{14}$-Aralkyl, für eine Gruppe der Formel (VI), oder eine Gruppe der Formeln (VII) oder (VIII),

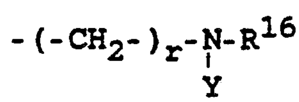

(VII),

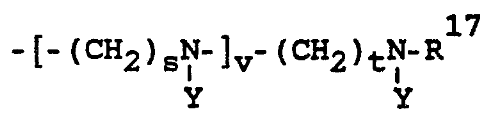

(VIII).

stehen, mit

r, s und t =

gleiche oder unterschiedliche Zahlen von 2 bis 6,

v =

eine ganze Zahl von 0 bis 3,

$R^{16}$ und $R^{17}$ =

gleichen oder verschiedenen Resten, die Wasserstoff, $C_1$- bis $C_{18}$-Alkyl, $C_5$- bis $C_{12}$-Cycloalkyl, $C_7$- bis $C_{14}$-Aralkyl, oder eine Gruppe der Formel (VI) sein können,

und

Y =

einem Rest der Formel (IX)

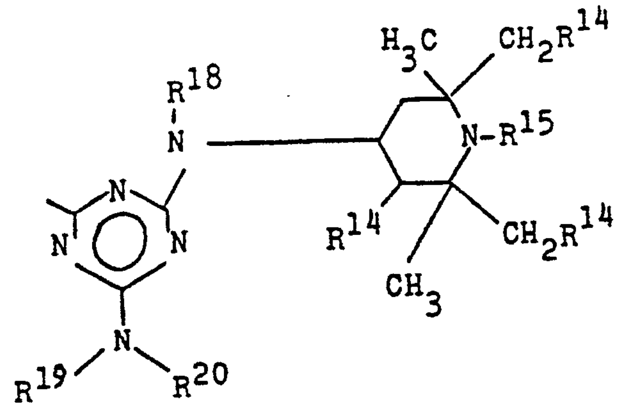

(IX),

in der $R^{14}$ und $R^{15}$ die vorstehend angegebenen Bedeutungen, und

$R^{18}$ und $R^{19}$

die für $R^5$, $R^6$, $R^7$ und $R^8$ genannten Bedeutungen, ausgenommen die der Formeln (VII) und (VIII) haben, und

$R^{20}$

Wasserstoff, $C_1$- bis $C_{18}$-Alkyl, $C_5$- bis $C_{12}$-Cycloalkyl, $C_7$- bis $C_{14}$-Aralkyl, oder eine Gruppe der Formel (VI) ist,

$R^9$

die Bedeutung einer Gruppe der Formeln (VII) oder (VIII) hat,

$R^{10}$ und $R^{12}$

gleiche oder verschiedene Reste mit der Bedeutung von $R^{16}$ und $R^{17}$ sind,

$R^{11}$

für $C_2$- bis $C_{18}$-Alkylen oder für $C_2$- bis $C_{12}$-Bis(propyloxi)-alkylen oder für unsubstituiertes oder durch bis zu vier Methylgruppen substituiertes $C_6$-bis $C_{18}$-Mono-, Di- oder Tricycloalkylen, in welchem bei dem erstgenannten zwei C-Atome durch N-Atome, welche Propylengruppen tragen können, ersetzt sein können, oder $C_6$- bis $C_{18}$-Arylen oder für $C_7$- bis $C_{18}$-Aralkylen steht oder der Rest

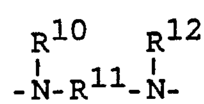

einen Piperazinylenrest darstellt, und

$R^{13}$

Methyl, Hydroximethylen oder Ethyl ist und in der Formel (I) mindestens ein Rest für eine Gruppe der Formel (VI) steht oder diese enthält, dadurch gekennzeichnet, daß man einen Ester der Formel (X),

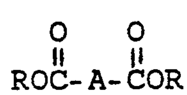

(X),

worin A die oben angegebenen Bedeutungen hat und R Methyl oder Ethyl ist, in einem inerten organischen Lösungsmittel bei einer Reaktionstemperatur von 70 bis 200 °C, falls erforderlich unter Zusatz von Katalysatoren, mit einer Verbindung der allgemeinen Formel (XI),

H-O-B-O-H (XI)

oder einem Gemisch derartiger Verbindungen umsetzt, wobei in dieser Formel B die oben angegebene Bedeutung hat, und wobei die 0,8 bis 1,2-fach molare Menge von (XI), bezogen auf funktionelle Gruppen in (X), zum Einsatz kommt.

2. Verwendung der nach Anspruch 1 hergestellten Verbindungen zum Stabilisieren von synthetischen

Polymeren.

3. Verwendung nach Anspruch 2, dadurch gekennzeichnet, daß die Polymeren Polyolefine sind.

4. Verwendung nach Anspruch 2, dadurch gekennzeichnet, daß die Polymeren halogenhaltige Polymere, Polyacrylate oder Polymethacrylate oder Homo- oder Copolymere des Styrols sind.

## Claims

1. A polyalkylpiperidine compound of the formula (I)

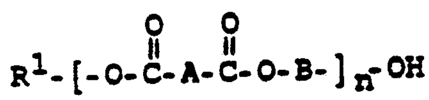

(I)

in which
n is an integer greater than 1 up to 100 and
A is a $C_1$- to $C_{18}$-aliphatic radical which can be substituted by one or two OH groups and/or one or two

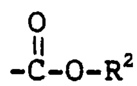

radicals, or is phenylene, naphthylene, $C_7$- to $C_{14}$-phenylalkylene or $C_3$- to $C_{12}$-cycloalkylene, each of which can be substituted by $C_1$-$C_4$-alkyl radicals and/or one or two OH groups and/or one or two

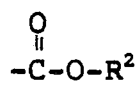

radicals, or is the radical

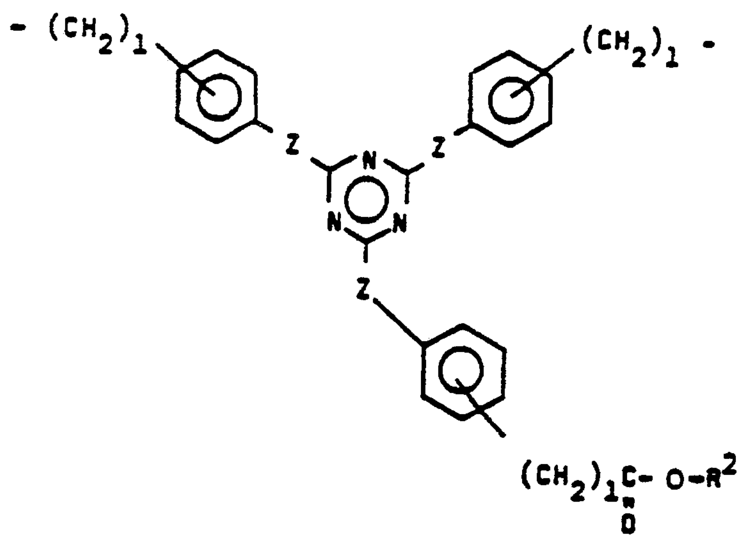

or is a radical

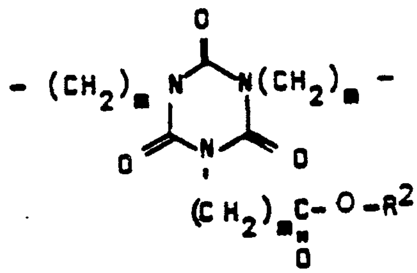

wherein, in these radicals,
l is an integer from 0 to 2,
m is an integer from 1 to 5 and
Z is -O- or -NH-, and
$R^1$ and $R^2$ should be methyl or ethyl, and
B is a group of the formula (II), (III), (IV) or (V)

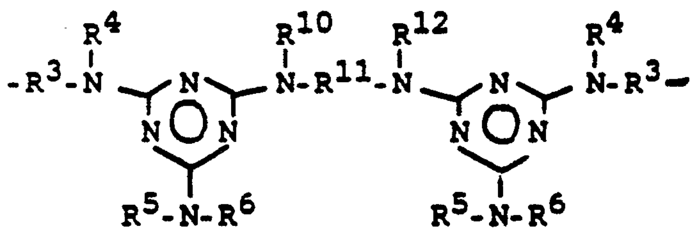 (II),

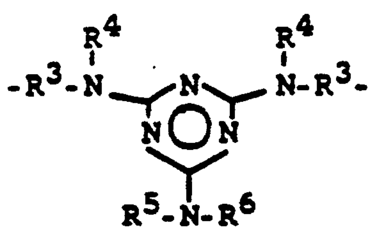 (III),

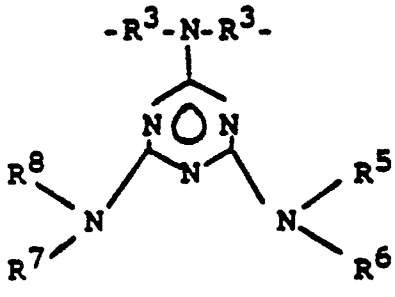 (IV),

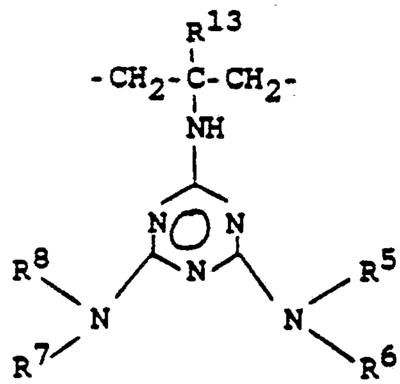

(V)

wherein, in the formulae (II) to (V),
$R^3$ is a $C_2$- to $C_6$-alkylene group,
$R^4$ is hydrogen, $C_1$- to $C_{12}$-alkyl, $C_5$- to $C_{12}$-cycloalkyl or a group of the formula (VI)

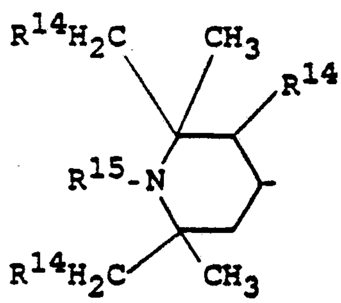

(VI),

in which
$R^{14}$ is hydrogen or methyl and
$R^{15}$ is hydrogen, $C_1$- to $C_{12}$-alkyl which can be substituted by 1 or 2 hydroxyl groups, $C_3$ to $C_8$ alkenyl or benzyl,
$R^5$, $R^6$, $R^7$ and $R^8$ are identical or different and are hydrogen, $C_1$- to $C_{18}$-alkyl which can be substituted by hydroxyl, $C_1$- to $C_{18}$-alkoxy or $C_1$- to $C_4$-dialkylamino, alkyl substituted by alkoxy or dialkylamino preferably having 2 to 5 carbon atoms and being substituted by $C_1$- to $C_{18}$-alkoxy or by $C_1$- to $C_4$-dialkylamino, or are $C_5$- to $C_{12}$-cycloalkyl, allyl,-phenyl which can be substituted by 1 or 2 $C_1$- to $C_8$-alkyl groups and/or by OH, $C_7$- to $C_{14}$-aralkyl, a group of the formula (VI) or a group of the formulae (VII) or (VIII)

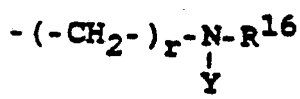

(VII),

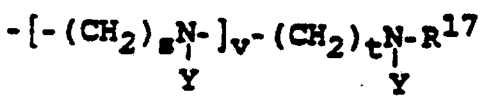

(VIII);

in which
r, s and t are identical or different numbers from 2 to 6,
v is an integer from 0 to 3,
$R^{16}$- and $R^{17}$ are identical or different radicals which can be hydrogen, $C_1$- to $C_{18}$-alkyl, $C_5$- to $C_{12}$-cycloalkyl, $C_7$- to $C_{14}$-aralkyl or a group of the formula (VI), and
Y is a radical of the formula (IX)

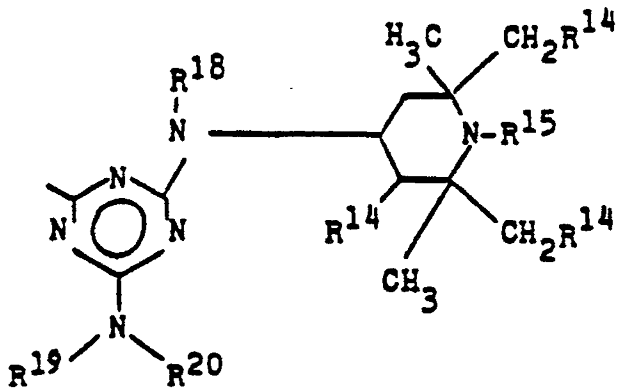

(IX),

in which $R^{14}$ and $R^{15}$ have the meanings indicated above and $R^{18}$ and $R^{19}$ have the meanings specified for $R^5$, $R^6$, $R^7$ and $R^8$, excepting those of the formulae (VII) and (VIII), and $R^{20}$ is hydrogen, $C_1$-to $C_{18}$-alkyl, $C_5$-to $C_{12}$-cycloalkyl, $C_7$- to $C_{14}$-aralkyl or a group of the formula (VI), and $R^9$ has the meaning of a group of the formulae (VII) or (VIII),

$R^{10}$ and $R^{12}$ are identical or different radicals having the meaning of $R^{16}$ and $R^{17}$,

$R^{11}$ is $C_2$- to $C_{18}$-alkylene or $C_2$- to $C_{12}$-bis(propoxy)-alkylene or $C_6$- to $C_{18}$-mono-, di- or tri-cycloalkylene which is unsubstituted or substituted by up to four methyl groups, in which, in the case first mentioned, two carbon atoms can be replaced by nitrogen atoms which can carry propylene groups, or is $C_6$- to $C_{18}$-arylene or $C_7$- to $C_{18}$-aralkylene or the radical

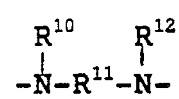

is a piperazinylene radical, and

$R^{13}$ is methyl, hydroxymethylene or ethyl and, in the formula (I), at least one radical is a group of the formula (VI) or contains this group.

2. A process for the preparation of a polyalkylpiperidine compound as claimed in claim 1, which comprises reacting an ester of the formula (X)

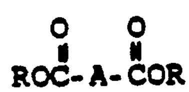

(X),

wherein A has the meanings indicated in claim 1 and R is methyl or ethyl, in an inert organic solvent at a reaction temperature of from 70 to 200 °C, if necessary with the addition of catalysts, with a compound of the general formula (XI)

H-O-B-O-H (XI)

or with a mixture of compounds of this type, wherein B in this formula has the meaning indicated in claim 1 and a 0.8-fold to 1.2-fold molar amount of (XI) is employed, relative to functional groups in (X).

3. The use of the compounds as claimed in claim 1 for stabilizing synthetic polymers.

4. The use as claimed in claim 3, wherein the polymers are polyolefins.

5. The use as claimed in claim 3, wherein the polymers are halogen-containing polymers, polyacrylates or polymethacrylates or homopolymers or copolymers of styrene.

6. A process for stabilizing synthetic polymers against the harmful influence of light, which comprises adding 0.01 to 5 parts by weight, relative to the polymer, of a compound as claimed in claim 1 to the polymers, if appropriate as well as known substances having a stabilizing action.

7. Synthetic polymers which have been stabilized against UV decomposition and in which 0.01 to 5 parts by weight, relative to the polymer, of a compound as claimed in claim 1 are present as a stabilizer.

Claims for the following Contracting State: AT

1. A process for the preparation of a polyalkylpiperidine compound of the formula (I)

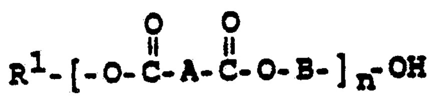

(I)

in which
n is an integer greater than 1 up to 100 and
A is a $C_1$- to $C_{18}$-aliphatic radical which can be substituted by one or two OH groups and/or one or two

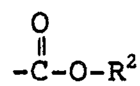

radicals, or is phenylene, naphthylene, $C_7$-to $C_{14}$-phenylalkylene or $C_3$- to $C_{12}$-cycloalkylene each of which can be substituted by $C_1$-$C_4$-alkyl radicals and/or
one or two OH groups and/or one or two

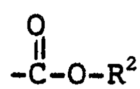

radicals, or is the radical

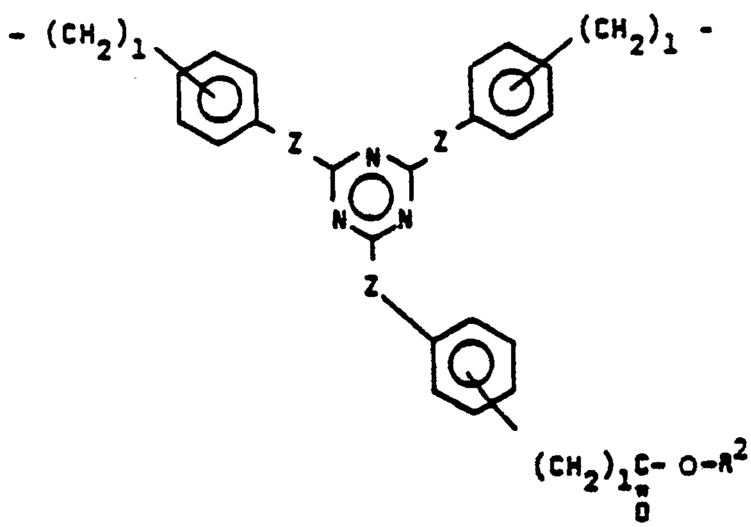

or is a radical

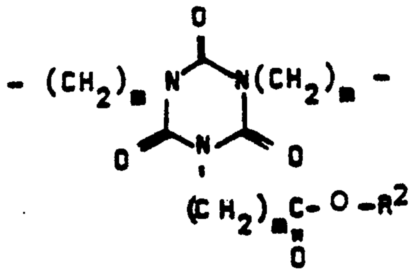

wherein, in these radicals,
l is an integer from 0 to 2,
m is an integer from 1 to 5 and
Z is -O- or -NH-, and
$R^1$ and $R^2$ should be methyl or ethyl, and
B is a group of the formula (II), (III), (IV) or (V)

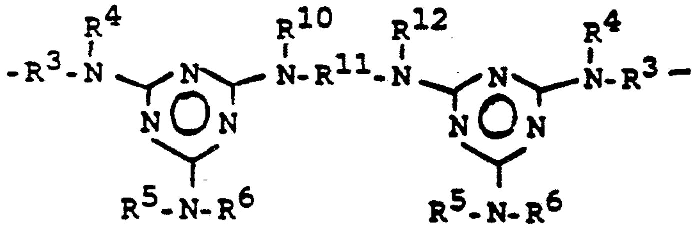

(II),

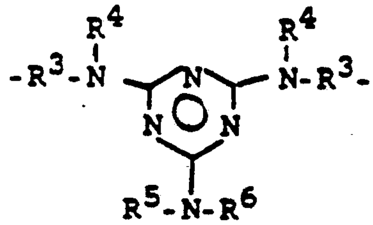

(III),

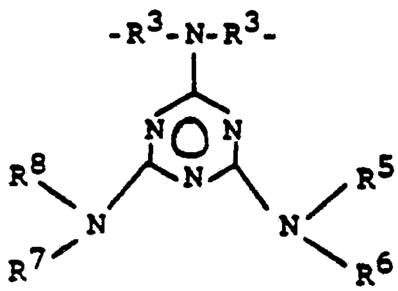

(IV),

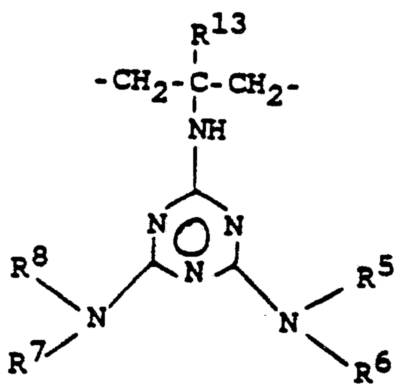

(V);

wherein, in the formulae (II) to (V),
$R^3$ is a $C_2$- to $C_6$-alkylene group,
$R^4$ is hydrogen, $C_1$- to $C_{12}$-alkyl, $C_5$- to $C_{12}$-cycloalkyl or preferably a group of the formula (VI)

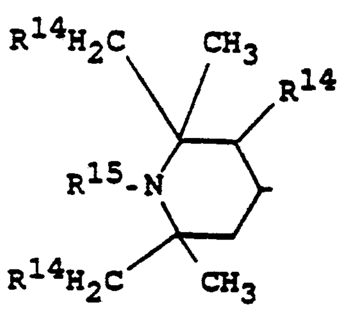

(VI),

in which
$R^{14}$ is hydrogen or methyl and
$R^{15}$ is hydrogen, $C_1$- to $C_{12}$-alkyl which can be substituted by 1 or 2 hydroxyl groups, $C_3$- to $c_8$-alkenyl or benzyl, $R^5$, $R^6$, $R^7$ and $R^8$ are identical or different and are hydrogen, $C_1$- to $C_{18}$-alkyl which can be substituted by hydroxyl, $C_1$- to $C_{18}$-alkoxy or $C_1$-to $C_4$-dialkylamino, alkyl substituted by alkoxy or dialkylamino preferably having 2 to 5 carbon atoms and being substituted by $C_1$- to $C_{18}$-alkoxy or by $C_1$-to $C_4$-dialkylamino, or are $C_5$- to $C_{12}$-cycloalkyl, allyl, phenyl which can be substituted by 1 or 2 $C_1$- to $C_8$-alkyl groups and/or by OH, $C_7$- to $C_{14}$-aralkyl, a group of the formula (VI) or a group of the formulae (VII) or (VIII)

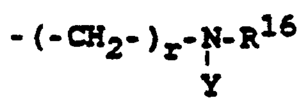
(VII),

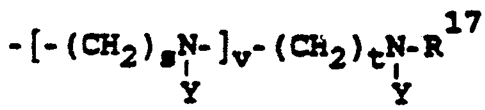
(VIII),

in which
r, s and t are identical or different numbers from 2 to 6,
v is an integer from 0 to 3,
$R^{16}$ and $R^{17}$ are identical or different radicals which can be hydrogen, $C_1$- to $C_{18}$-alkyl, $C_5$- to $C_{12}$-cycloalkyl, $C_7$- to $C_{14}$-aralkyl or a group of the formula (VI), and
Y is a radical of the formula (IX)

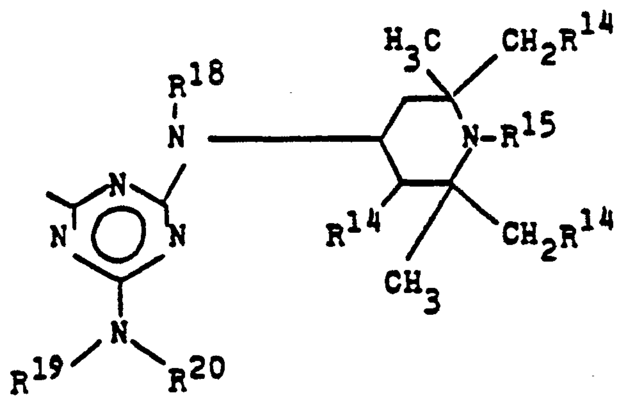
(IX),

in which $R^{14}$ and $R^{15}$ have the meanings indicated above and
$R^{18}$ and $R^{19}$ have the meanings specified for $R^5$, $R^6$ $R^7$ and $R^8$, excepting those of the formulae (VII) and (VIII), and $R^{20}$ is hydrogen, $C_1$- to $C_{18}$-alkyl, $C_5$- to $C_{12}$-cycloalkyl, $C_7$- to $C_{14}$-aralkyl or a group of the formula (VI), and
$R^9$ has the meaning of a group of the formulae (VII) or (VIII),
$R^{10}$ and $R^{12}$ are identical or different radicals having the meaning of $R^{16}$ and $R^{17}$,
$R^{11}$ is $C_2$- to $C_{18}$-alkylene or $C_2$- to $C_{12}$-bis(propoxy)-alkylene or $C_6$- to $C_{18}$-mono-, di- or tricycloalkylene which is unsubstituted or substituted by up to four methyl groups, in which, in the case first mentioned, two carbon atoms can be replaced by nitrogen atoms which can carry propylene groups, or is $C_6$- to $C_{18}$-arylene or $C_7$- to $C_{18}$-aralkylene or the radical

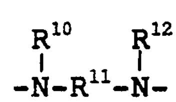

is a piperazinylene radical, and
$R^{13}$ is methyl, hydroxymethylene or ethyl and, in the formula (I), at least one radical is a group of the formula (VI) or contains this group, which comprises reacting an ester of the formula (X)

$$RO\overset{O}{\overset{\|}{C}}-A-\overset{O}{\overset{\|}{C}}OR \qquad (X),$$

wherein A has the meanings indicated above and R is methyl or ethyl, in an inert organic solvent at a reaction temperature of from 70 to 200 °C, if necessary with the addition of catalysts, with a compound of the general formula (XI)

H-O-B-O-H (XI)

or with a mixture of compounds of this type, wherein B in this formula has the meaning indicated above, and a 0.8-fold to 1.2-fold molar amount of (XI) is employed, relative to functional groups in (X).

2. The use of the compounds as prepared in claim 1 for stabilizing synthetic polymers.

3. The use as claimed in claim 2, wherein the polymers are polyolefins.

4. The use as claimed in claim 2, wherein the polymers are halogen-containing polymers, polyacrylates or polymethacrylates or homopolymers or copolymers of styrene.

## Revendications

1. Composés polyalkyl-pipéridiniques répondant à la formule générale I :

$$R^1-[-O-\overset{O}{\overset{\|}{C}}-A-\overset{O}{\overset{\|}{C}}-O-B-]_n-OH \qquad (I)$$

dans laquelle
n
représente un nombre entier supérieur à 1 et pouvant aller jusqu'à 100,
A
représente :
- un radical aliphatique en $C_1$-$C_{18}$ qui peut porter un ou deux radicaux -OH et/ou un ou deux radicaux

$$-\overset{O}{\overset{\|}{C}}-O-R^2,$$

ou
- un phénylène, un naphtylène, un phénylalkylène en $C_7$-$C_{14}$, ou un cycloalkylène en $C_3$-$C_{12}$, chacun de ces radicaux pouvant porter des alkyles en $C_1$-$C_4$ et/ou un ou deux radicaux -OH et/ou un ou deux radicaux

$$-\overset{O}{\overset{\|}{C}}-O-R^2,$$

ou

- un radical répondant à l'une des formules :

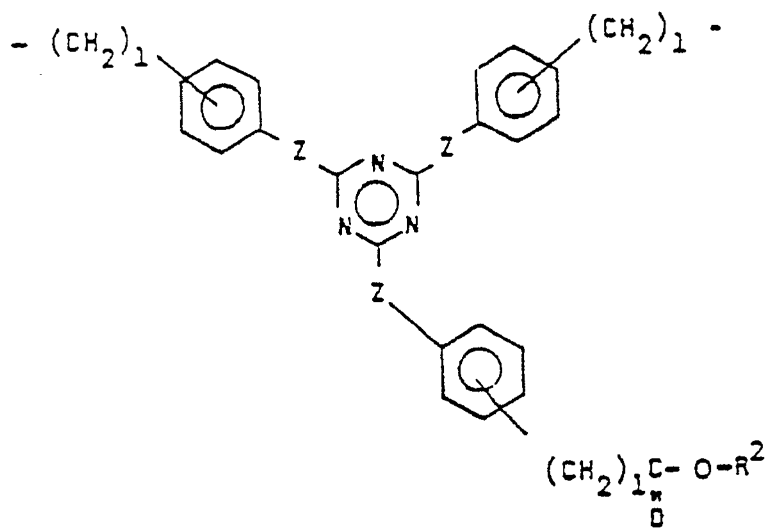

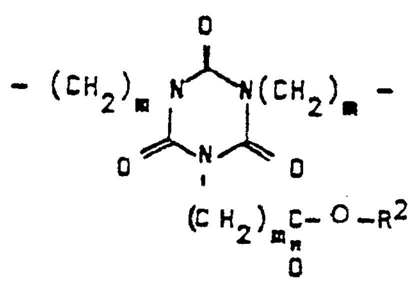

dans lesquelles

l

représente un nombre entier de 0 à 2,

m

représente un nombre entier de 1 à 5,

Z

représente -O- ou -NH-, et

$R^1$ et $R^2$

représentent chacun un méthyle ou un éthyle,

B

représente un radical répondant à l'une des formules II, III, IV et V :

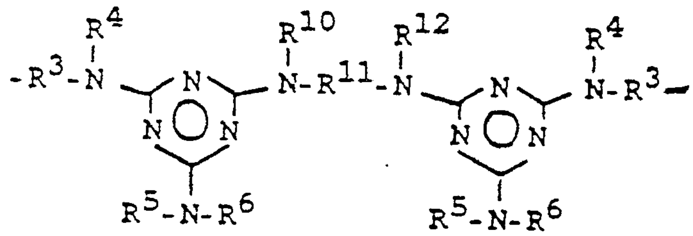

(II),

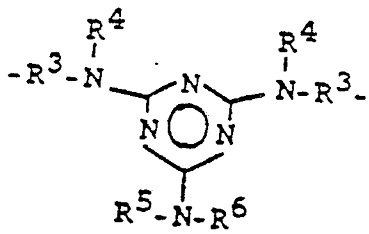

(III),

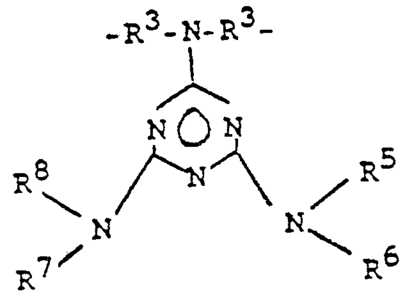

(IV),

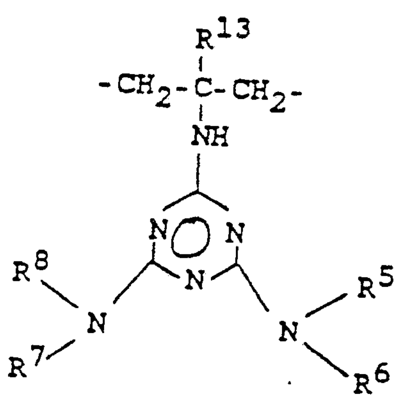

(V),

dans lesquelles

$R^3$

représente un alkylène en $C_2$-$C_6$,

$R^4$

représente l'hydrogène, un alkyle en $C_1$-$C_{12}$, un cycloalkyle en $C_5$-$C_{12}$ ou un radical de formule VI :

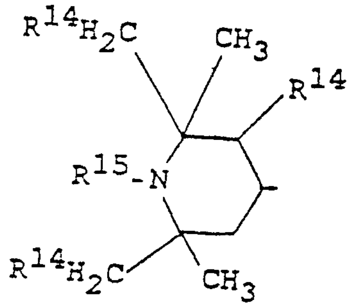

(VI)

dans lequel $R^{14}$ représente l'hydrogène ou un méthyle et $R^{15}$ l'hydrogène, un alkyle en $C_1$-$C_{12}$, éventuellement porteur d'un ou de deux radicaux hydroxy, un alcényle en $C_3$-$C_8$ ou un benzyle,

$R^5$, $R^6$, $R^7$ et $R^8$

représentent chacun, indépendamment les uns des autres, l'hydrogène, un alkyle en $C_1$-$C_{18}$, éventuellement porteur d'un hydroxy, d'un alcoxy en $C_1$-$C_{18}$ ou d'un di-(alkyl-$C_1$-$C_4$)-amino [un alkyle porteur d'un alcoxy ou d'un dialkylamino contient de préférence de 2 à 5 atomes de carbone et porte un alcoxy en $C_1$-$C_{18}$ ou un di-(alkyl-$C_1$-$C_4$)-amino], un cycloalkyle en $C_5$-$C_{12}$, un allyle, un phényle éventuellement porteur d'un ou de deux alkyles en $C_1$-$C_8$ et/ou d'un radical -OH, un aralkyle en $C_7$-$C_{14}$, un radical de formule VI ou un radical répondant à l'une des formules VII et VIII :

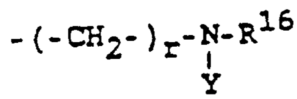

(VII)

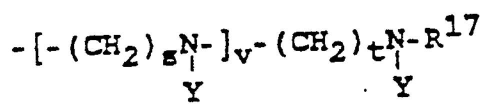

(VIII)

dans lesquelles

r, s et t

représentent chacun, indépendamment l'un de l'autre, un nombre de 2 à 6,

v

représente un nombre de 0 à 3,

$R^{16}$ et $R^{17}$

représentent chacun, indépendamment l'un de l'autre, l'hydrogène, un alkyle en $C_1$-$C_{18}$, un cycloalkyle en $C_5$-$C_{12}$, un aralkyle en $C_7$-$C_{14}$, ou un radical de formule VI, et

Y

représente un radical répondant à la formule IX

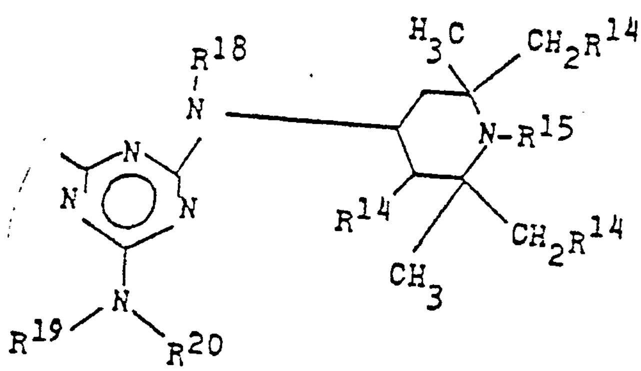

(IX)

dans laquelle

$R^{14}$ et $R^{15}$
ont les significations qui leur ont été données ci-dessus,
$R^{18}$ et $R^{19}$
ont les significations qui ont été données ci-dessus pour $R^5$, $R^6$, $R^7$ et $R^8$ sauf celles des formules VII et VIII, et
$R^{20}$
représente l'hydrogène, un alkyle en $C_1$-$C_{18}$, un cycloalkyle en $C_5$-$C_{12}$, un aralkyle en $C_7$-$C_{14}$, ou un radical de formule VI,
$R^9$
représente un radical de formule VII ou VIII,
$R^{10}$ et $R^{12}$
ont chacun, indépendamment l'un de l'autre, la signification de $R^{16}$ et de $R^{17}$,
$R^{11}$
représente un alkylène en $C_2$-$C_{18}$, un bis-(propyloxy)-alkylène en $C_2$-$C_{12}$, un mono-, di-ou tri-cycloalkylène en $C_6$-$C_{18}$ qui ne porte pas de substituant ou qui peut porter jusqu'à 4 radicaux méthyles et dans lequel, lorsqu'il s'agit du premier type cité, deux atomes de carbone peuvent être remplacés par des atomes d'azote éventuellement porteurs de radicaux propylènes, un arylène en $C_6$-$C_{18}$ ou un aralkylène en $C_7$-$C_{18}$, ou

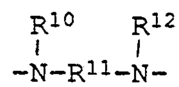

représente un radical pipérazinylène, et
$R^{13}$
représente un méthyle, un hydroxyméthylène ou un éthyle,

avec la condition que, dans cette formule I, au moins un radical soit ou contienne un radical de formule VI.

2. Procédé pour préparer des composés polyalkylpipéridiniques selon la revendication 1, procédé caractérisé en ce qu'on fait réagir un ester répondant à la formule X :

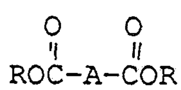

(X)

dans laquelle A a la signification qui lui a été donnée à la revendication 1 et R représente un radical méthyle ou éthyle, dans un solvant organique inerte, à une température réactionnelle comprise entre 70 et 200 °C et, si cela est nécessaire, en présence de catalyseurs, avec un composé répondant à la formule générale XI :

H-O-B-O-H (XI)

dans laquelle B a la signification qui lui a été donnée à la revendication 1, ou avec un mélange de composés de ce genre, le composé XI étant mis en jeu en une quantité représentant de 0,8 à 1,2 fois la quantité molaire par rapport aux radicaux fonctionnels contenus dans le composé (X).

3. Application des composés selon la revendication 1 à la stabilisation de polymères synthétiques.

4. Application selon la revendication 3 caractérisée en ce que les polymères sont des polyoléfines.

5. Application selon la revendication 3 caractérisée en ce que les polymères sont des polymères halogénés, des polyacrylates, des polyméthacrylates, ou des homopolymères ou copolymères du styrène.

**6.** Procédé pour stabiliser des polymères synthétiques contre l'action destructrice de la lumière, procédé caractérisé en ce qu'on ajoute aux polymères, éventuellement en plus de substances connues à action stabilisante, de 0,01 à 5 % en poids, par rapport au polymère, d'un composé selon la revendication 1.

**7.** Polymères synthétiques stabilisés contre la décomposition par les rayons ultraviolets, polymères qui contiennent, comme stabilisant, de 0,01 à 5 % en poids, par rapport au polymère, d'un composé selon la revendication 1.

Revendications pour l'Etat contractant suivant: AT

**1.** Procédé pour préparer des composés polyalkylpipéridiniques répondant à la formule générale I :

$$R^1-[-O-\overset{\overset{O}{\|}}{C}-A-\overset{\overset{O}{\|}}{C}-O-B-]_n-OH \qquad (I)$$

dans laquelle

n

représente un nombre entier supérieur à 1 et pouvant aller jusqu'à 100,

A

représente :

- un radical aliphatique en $C_1$-$C_{18}$ qui peut porter un ou deux radicaux -OH et/ou un ou deux radicaux

$$-\overset{\overset{O}{\|}}{C}-O-R^2,$$

ou

- un phénylène, un naphtylène, un phénylalkylène en $C_7$-$C_{14}$, ou un cycloalkylène en $C_3$-$C_{12}$, chacun de ces radicaux pouvant porter des alkyles en $C_1$-$C_4$ et/ou un ou deux radicaux -OH et/ou un ou deux radicaux

$$-\overset{\overset{O}{\|}}{C}-O-R^2,$$

ou

- un radical répondant à l'une des formules :

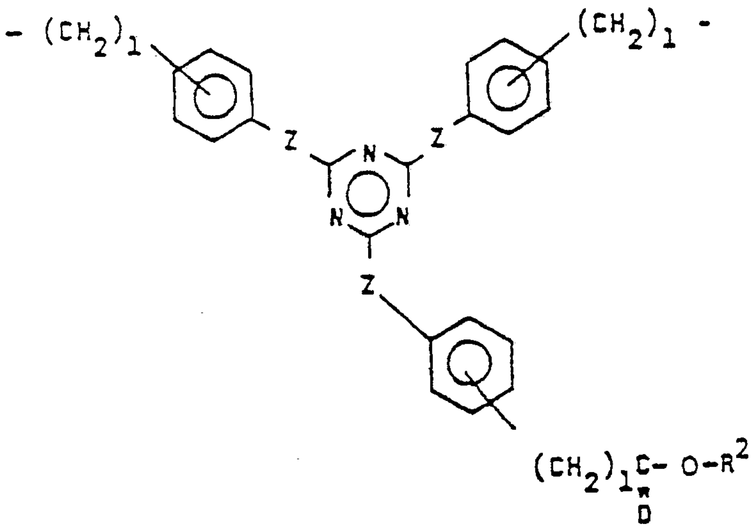

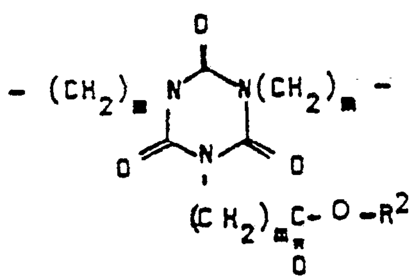

dans lesquelles

l

représente un nombre entier de 0 à 2,

m

représente un nombre entier de 1 à 5,

Z

représente -O- ou -NH-, et

$R^1$ et $R^2$

représentent chacun un méthyle ou un éthyle,

B

représente un radical répondant à l'une des formules II, III, IV et V :

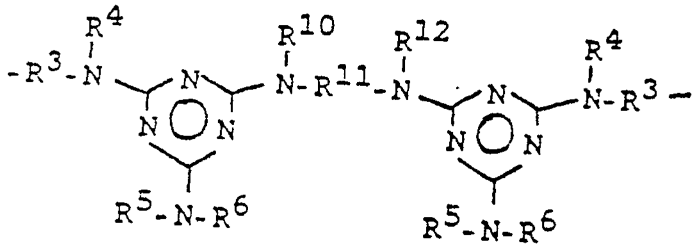

(II),

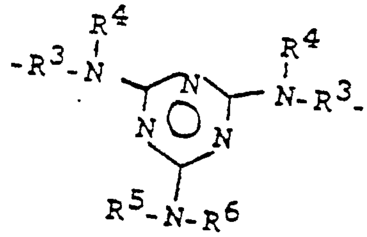

(III),

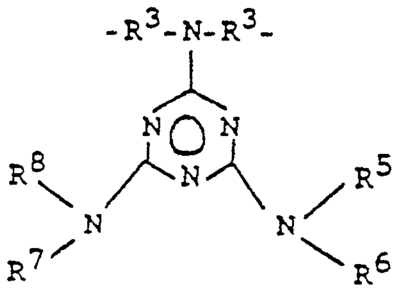

(IV),

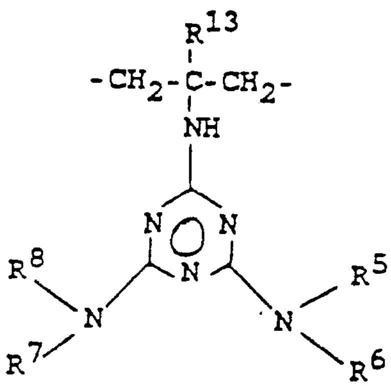

(V),

dans lesquelles

$R^3$
représente un alkylène en $C_2$-$C_6$,
$R^4$
représente l'hydrogène, un alkyle en $C_1$-$C_{12}$, un cycloalkyle en $C_5$-$C_{12}$ ou un radical de formule VI :

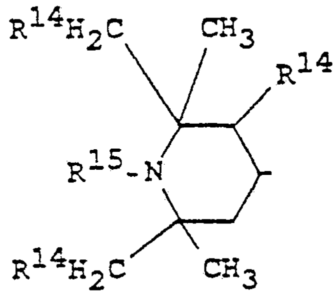

(VI)

dans lequel $R^{14}$ représente l'hydrogène ou un méthyle et $R^{15}$ l'hydrogène, un alkyle en $C_1$-$C_{12}$, éventuellement porteur d'un ou de deux radicaux hydroxy, un alcényle en $C_3$-$C_8$ ou un benzyle,
$R^5$, $R^6$, $R^7$ et $R^8$
représentent chacun, indépendamment les uns des autres, l'hydrogène, un alkyle en $C_1$-$C_{18}$, éventuellement porteur d'un hydroxy, d'un alcoxy en $C_1$-$C_{18}$ ou d'un di-(alkyl-$C_1$-$C_4$)-amino [un alkyle porteur d'un alcoxy ou d'un dialkylamino contient de préférence de 2 à 5 atomes de carbone et porte un alcoxy en $C_1$-$C_{18}$ ou un di-(alkyl-$C_1$-$C_4$)-amino], un cycloalkyle en $C_5$-$C_{12}$, un allyle, un phényle éventuellement porteur d'un ou de deux alkyles en $C_1$-$C_8$ et/ou d'un radical -OH, un aralkyle en $C_7$-$C_{14}$, un radical de formule VI ou un radical répondant à l'une des formules VII et VIII :

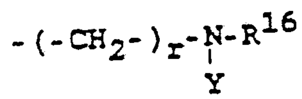

(VII)

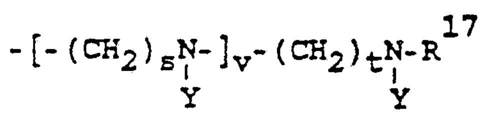

(VIII)

dans lesquelles
r, s et t représentent chacun, indépendamment l'un de l'autre, un nombre de 2 à 6,
v
représente un nombre de 0 à 3,
$R^{16}$ et $R^{17}$
représentent chacun, indépendamment l'un de l'autre, l'hydrogène, un alkyle en $C_1$-$C_{18}$, un cycloalkyle en $C_5$-$C_{12}$, un aralkyle en $C_7$-$C_{14}$, ou un radical de formule VI, et
Y
représente un radical répondant à la formule IX

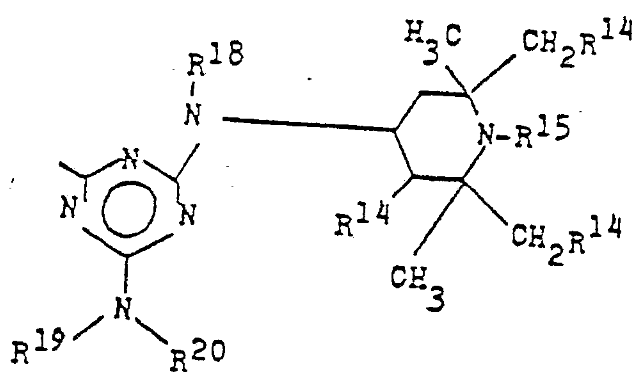

(IX)

dans laquelle
$R^{14}$ et $R^{15}$

ont les significations qui leur ont été données ci-dessus,

$R^{18}$ et $R^{19}$

ont les significations qui ont été données ci-dessus pour $R^5$, $R^6$, $R^7$ et $R^8$ sauf celles des formules VII et VIII, et

$R^{20}$

représente l'hydrogène, un alkyle en $C_1$-$C_{18}$, un cycloalkyle en $C_5$-$C_{12}$, un aralkyle en $C_7$-$C_{14}$, ou un radical de formule VI,

$R^9$

représente un radical de formule VII ou VIII,

$R^{10}$ et $R^{12}$

ont chacun, indépendamment l'un de l'autre, la signification de $R^{16}$ et de $R^{17}$,

$R^{11}$

représente un alkylène en $C_2$-$C_{18}$, un bis-(propyloxy)-alkylène en $C_2$-$C_{12}$, un mono-, di-ou tricycloalkylène en $C_6$-$C_{18}$ qui ne porte pas de substituant ou qui peut porter jusqu'à 4 radicaux méthyles et dans lequel, lorsqu'il s'agit du premier type cité, deux atomes de carbone peuvent être remplacés par des atomes d'azote éventuellement porteurs de radicaux propylènes, un arylène en $C_6$-$C_{18}$ ou un aralkylène en $C_7$-$C_{18}$, ou

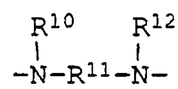

représente un radical pipérazinylène, et

$R^{13}$

représente un méthyle, un hydroxyméthylène ou un éthyle,

avec la condition que, dans cette formule I, au moins un radical soit ou contienne un radical de formule VI,

procédé caractérisé en ce qu'on fait réagir un ester répondant à la formule X :

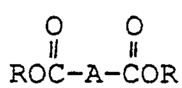

(X)

dans laquelle A a la signification qui lui a été donnée ci-dessus et R représente un radical méthyle ou éthyle, dans un solvant organique inerte, à une température réactionnelle comprise entre 70 et 200 °C et, si cela est nécessaire, en présence de catalyseurs, avec un composé répondant à la formule générale XI :

H-O-B-O-H (XI)

dans laquelle B a la signification qui lui a été donnée ci-dessus, ou avec un mélange de composés de ce genre, le composé XI étant mis en jeu en une quantité représentant de 0,8 à 1,2 fois la quantité molaire par rapport aux radicaux fonctionnels contenus dans le composé (X).

**2.** Application des composés préparés selon la revendication 1 à la stabilisation de polymères synthétiques.

**3.** Application selon la revendication 2 caractérisée en ce que les polymères sont des polyoléfines.

**4.** Application selon la revendication 2 caractérisée en ce que les polymères sont des polymères halogénés, des polyacrylates, des polyméthacrylates, ou des homopolymères ou copolymères du styrène.